(19) Europäisches Patentamt
European Patent Office
Office européen des brevets

(11) Veröffentlichungsnummer: **0 496 318 B1**

(12) # EUROPÄISCHE PATENTSCHRIFT

(45) Veröffentlichungstag der Patentschrift: **05.04.95**

(51) Int. Cl.$^6$: **C08G 69/32**, C08G 69/26

(21) Anmeldenummer: **92100822.3**

(22) Anmeldetag: **18.01.92**

(54) **Aromatische Copolyamide, Verfahren zu ihrer Herstellung und daraus geformte Gebilde.**

(30) Priorität: **19.01.91 DE 4101465**

(43) Veröffentlichungstag der Anmeldung:
**29.07.92 Patentblatt 92/31**

(45) Bekanntmachung des Hinweises auf die Patenterteilung:
**05.04.95 Patentblatt 95/14**

(84) Benannte Vertragsstaaten:
**CH DE FR GB IT LI NL**

(56) Entgegenhaltungen:
**EP-A- 0 199 090**
**EP-A- 0 303 949**
**EP-A- 0 322 837**
**EP-A- 0 364 893**

(73) Patentinhaber: **HOECHST AKTIENGESELLSCHAFT**

**D-65926 Frankfurt (DE)**

(72) Erfinder: **Keil, Günter, Dr.**
**Frankfurter Strasse 60**
**W-6238 Hofheim am Taunus (DE)**
Erfinder: **Heinrich, Karl**
**Karwendelstrasse 2**
**W-8934 Grossaitingen (DE)**

**EP 0 496 318 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue aromatische Copolyamide des Dicarbonsäure-Diamintyps, Verfahren zu ihrer Herstellung, sowie daraus hergestellte geformte Gebilde wie Fäden, Fasern, Faserpulp, Filme, Folien und Membranen sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Es ist bekannt, daß Fäden oder Fasern aus Polyaramiden mit hoher Festigkeit und sehr hohem Anfangsmodul hergestellt werden können, wenn die Amidbindungen koaxial oder nahezu parallel zueinander orientiert sind, wodurch starre, stäbchenförmige Polymermoleküle entstehen. Typische Polyamidfasern dieser Art bestehen beispielsweise aus Poly-(-p-phenylenterephthalamid). Derartige Fäden sind beispielsweise in der Deutschen Patentschrift 22 19 703 beschrieben.

Dieses Produkt weist eine Reihe von Vorzügen auf, die Herstellung des benötigten Polyamids und seine Verarbeitung sind jedoch sehr schwierig. Beispielsweise wegen der schlechten Löslichkeit in polaren organischen Lösungsmitteln - und zwar auch in Gegenwart von anorganischen Salzen wie Calciumchlorid oder Lithiumchlorid als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach einer hohen Verstreckung durch hohe Festigkeitswerte und Anfangsmoduli auszeichnen.

So wurde beispielsweise in der DE-A-21 44 126 = US-A-3,801,545 die Herstellung von löslichen aromatischen Polyamiden beschrieben, wonach substituierte 3-(p-Aminophenoxy)-4-aminobenzanilide mit Terephthaloylchlorid gut lösliche Polyamide liefern, welche sich zu Filamenten von mäßig guten Festigkeiten und Anfangsmoduli verspinnen und verstrecken lassen.

Die erhöhte Löslichkeit wird hier durch die meta-Orientierung und das Sauerstoffbrückenatom verursacht. In der Deutschen Patentschrift 25 56 885, in der Deutschen Offenlegungsschrift 30 07 063 und in der US-A-43 55 151 werden Copolyamide aus Terephthalsäure (TPS), p-Phenylendiamin (PPD) und 3,4'-Diaminodiphenylether (3,4'-DADPE) beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Nachteilig bei den vorgenannten Verfahren ist, daß die verschiedenen benötigten Amine nur in sher aufwendigen Verfahren hergestellt und gereinigt werden können.

In der EP-A-0199090 wird die erhöhte Löslichkeit bei sonst starren Molekülen durch den Einbau von Verbindungen der Struktur $H_2N$-Ar-X-Ar-$NH_2$, wobei für X = -$CH_2$- oder -O-$C_6H_4$-O- stehen kann, erreicht.

Eine Verbindung, die sehr leicht und preiswert zugänglich ist und die beim Einbau in ein Polyaramid eine erhöhte Löslichkeit durch einen Knick ("Kinke") in der Polymerkette bewirkt, ist das m-Phenylendiamin (MPD). Leider haben MPD-Polyamide meist recht schlechte Festigkeiten. So liefert das bekannte Poly-(m-phenylenisophthalamid) bei guter Löslichkeit Filamente mit Festigkeiten von nur 40-70 cN/tex (vgl. z.B. GB-A-917-889).

In der DE-A-2 566 883, Vergleichsversuch 6, wird gezeigt, daß ein Co-terephthalamid aus 80 % PPD und 20 % MPD Filamente mit einer Festigkeit von 73 cN/tex gibt. Ebenda, Vergleichsversuch 7, wird gezeigt, daß ein Co-terephthalamid mit 50 % PPD und 50 % MPD Filamente mit einer Festigkeit von 71 cN/tex liefert. Schließlich wird in der zitierten Schrift, Vergleichsversuch 8, ein Terephthalamid mit 100 %. MPD beschrieben mit einer Filamentfestigkeit von 75 cN/tex.

In der DE-A-30 07 063 wird die Verwendung von MPD neben dem ebenfalls löslichkeitserhöhenden und aufwendig herzustellenden 3,4'-Diaminodiphenylether und einem starren Diamin beschrieben. Der zusätzliche Einbau von MPD zu den bereits löslichen Polyaramiden aus PPD und 3,4'-DADPE bewirkt lediglich eine geringfügige Erhöhung der Reißdehnung und einen Abfall der Festigkeit. Als starres Diamin wird u.a. auch das hoch-toxische, carcinogene Benzidin verwendet.

Aus der EP-A-322,837 sind Copolyamide bekannt, die von 1,4-Bis-(4-aminophenoxy)-benzol abgeleitete Struktureinheiten aufweisen.

Aus der EP-A-364,893 sind Copolyamide bekannt die von 4,4'-Diaminobenzanilid, 3,3'-Dimethylbenzidin und

3,3'-Dimethoxybenzidin abgeleitete Struktureinheiten aufweisen

Der vorliegenden Erfindung liegt daher die Aufgabe zugrunde, solche aromatischen Copolyamide zu finden, die sich unter Verwendung von Amidlösungmitteln in geformte Gebilde überführen lassen, die sich dann durch eine Reihe von physikalischen Eigenschaften auszeichnen. Bei der Herstellung von Fäden und Fasern sollen nach entsprechenden Verstreckungsvergängen insbesondere hohe Festigkeiten und hohe Anfangsmoduli erzielbar sein. Die für die Herstellung der Copolyamide benötigten Monomere sollen leicht zugänglich sein, die durch die Polykondensation erhaltenen Polymerlösungen sollen nach einem Filtrationsprozeß und einer entsprechenden Entlüftung direkt spinnbar bzw. formbar sein.

Überraschenderweise und trotz der oben geschilderten Ergebnisse wurde nun gefunden, daß gut lösliche gewinkelte Monomereinheiten enthaltende aromatische Copolyamide, die sich zu geformten Gebilden wie Filamenten, Faserpulp und Folien von hoher Festigkeit verarbeiten lassen, erhältlich sind, wenn ausgewählte Kombinationen von Monomeren in ausgewählten Mengenanteilen eingesetzt werden.

Die Erfindung betrifft in einer Ausgestaltung in organischen Polyamid-Lösungsmittel lösliche Copolyamide mit einer inhärenten Viskosität, gemessen an Lösungen von 0,5 g Polyamid in 100 ml 98 %iger Schwefelsäure bei 25 °C, von etwa 3,5 bis 6,6 dl/g enthaltend die wiederkehrenden Struktureinheiten der Formeln Ia, Ib, Ic und Id und gegebenenfalls die wiederkehrenden Struktureinheiten der Formel Ie und/oder If

$-OC-Ar^1-CO-$ (Ia),
$-NH-Ar^2-NH-$ (Ib),
$-NH-Ar^3-NH-$ (Ic),

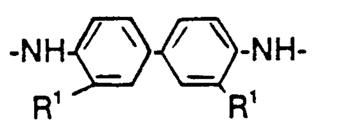
(Id),

$-OC-R^2-CO-$ (Ie),
$-NH-R^3-NH-$ (If),

worin die Summe der wiederkehrenden Struktureinheiten der Formeln Ia, Ib, Ic und Id mindestens 95 Mol-% beträgt und die wiederkehrenden Struktureinheiten der Formeln Ie und/oder If bis zu 5 Mol-% betragen können und der Molanteil der wiederkehrenden Struktureinheiten der Formeln Ia und gegebenenfalls Ie etwa dem Molanteil der wiederkehrenden Struktureinheiten Ib, Ic, Id und gegebenenfalls If entspricht,
worin $Ar^1$ ein zweiwertiger aromatischer Rest ist, dessen Valenzbindungen in para- oder in vergleichbarer koaxialer oder paralleler Stellung zueinander stehen, der gegebenenfalls ein oder mehrere gegenüber Carbonsäurechloriden inerte Substituenten aufweist,
$Ar^2$ 1,4-Phenylen ist,
$Ar^3$ 1,3-Phenylen ist, wobei $Ar^2$ und/oder $Ar^3$ gegebenenfalls ein oder mehrere gegenüber Carbonsäurechloriden inerte Substituenten aufweisen,
$R^1$ einen $C_1$-$C_6$ Alkylrest, einen $C_1$-$C_6$ Alkoxyrest oder ein Halogenatom bedeutet,
$R^2$ einen zweiwertigen aliphatischen, cycloaliphatischen oder araliphatischen Rest darstellt und
$R^3$ eine der für $R^2$ definierten Bedeutungen aufweist, mit der Maßgabe, daß die Reste $Ar^1$, $Ar^2$, $Ar^3$, $R^1$, $R^2$ und $R^3$ innerhalb eines Polymermoleküls innerhalb der gegebenen Definitionen unterschiedlich sein können und daß die Mengenanteile der wiederkehrenden Struktureinheiten der Formeln Ib, Ic und Id, bezogen auf die Gesamtmenge dieser Struktureinheiten, so gewählt werden, daß sie innerhalb der Eckpunkte des folgenden Bereichs liegen:
Punkt O entspricht 45 Mol-% des Restes der Formel Ib, 40 Mol-% des Restes der Formel Ic und 15 Mol-% des Restes der Formel Id;
Punkt P entspricht 65 Mol-% des Restes der Formel Ib, 20 Mol-% des Restes der Formel Ic und 15 Mol-% des Restes der Formel Id;
Punkt Q enspricht 65 Mol-% des Restes der Formel Ib, 5 Mol-% des Restes der Formel Ic und 30 Mol-% des Restes der Formel Id;
Punkt R entspricht 30 Mol-% des Restes der Formel Ib, 5 Mol-% des Restes der Formel Ic und 65 Mol-% des Restes der Formel Id;
Punkt S entspricht 20 Mol-% des Restes der Formel Ib, 15 Mol-% des Restes der Formel Ic und 65 Mol-% des Restes der Formel Id; und
Punkt T enspricht 20 Mol-% des Restes der Formel Ib, 40 Mol-% des Restes der Formel Ic und 40 Mol-%

des Restes der Formel Id.

In einer weiteren Ausgestaltung betrifft die Erfindung in organischen Polyamid-Lösungsmitteln lösliche Copolyamide mit einer inhärenten Viskosität, gemessen an Lösungen von 0,5 g Polyamid in 100 ml 98 %iger Schwefesäure bei 25 °C, von etwa 3,5 bis 6,6 dl/g enthaltend die wiederkehrenden Struktureinheiten der Formeln Ia, Ih, Id und Ig und gegebenenfalls die wiederkehrenden Struktureinheiten der Formeln Ii und/oder Ie und/oder If,

$-OC-Ar^1-C-$ (Ia),
$-NH-Ar^5-NH-$ (Ih),
$-NH-Ar^6-NH-$ (Ii),

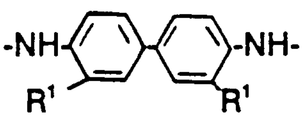
(Id),

$-OC-R^2-CO-$ (Ie),
$-NH-R^3-NH-$ (If),
$-OC-Ar^4-CO-$ (Ig),

worin die Summe der wiederkehrenden Struktureinheiten der Formeln Ia, Ih, Id und Ig und gegebenenfalls Ii mindestens 95 Mol-% beträgt und die wiederkehrenden Struktureinheiten der Formeln Ie und/oder If bis zu 5 Mol-% betragen können und der Molanteil der wiederkehrenden Struktureinheiten der Formeln Ia und Ig und gegebenenfalls Ie etwa dem Molanteil der wiederkehrenden Struktureinheiten Ih und Id und gegebenenfalls Ii und/oder If entspricht,
worin $Ar^1$, $R^1$, $R^2$ und $R^3$ die weiter oben definierte Bedeutung besitzen, $Ar^4$ und $Ar^6$ zweiwertige aromatische Reste sind, deren Valenzbindungen in meta- oder in verlgeichbarer gewinkelter Stellung zueinander stehen, die gegebenenfalls ein oder mehrere gegenüber Carbonsäurechloriden inerte Substituenten aufweisen, und $Ar^5$ eine der für $Ar^1$ definierten Bedeutungen aufweist, mit der Maßgabe, daß die Reste $Ar^1$, $Ar^5$, $Ar^6$, $Ar^4$, $R^1$, $R^2$ und $R^3$ innerhalb eines Polymermoleküls innerhalb der gegebenen Definitionen unterschiedlich sein können und daß die Mengenanteile der wiederkehrenden Struktureinheiten der Formeln Ia, Ih, Id und Ig und gegebenenfalls Ii, bezogen auf die Gesamtmenge dieser Struktureinheiten, so gewählt werden, daß sie innerhalb der Eckpunkte des folgenden Bereichs liegen:
Punkt V entspricht 72,5 Mol-% der Summe der wiederkehrenden Struktureinheiten der Formel Ia und Ih, 22,5 Mol-% der wiederkehrenden Struktureinheiten der Formel Ig oder der Summe der wiederkehrenden Struktureinheiten der Formeln Ii und Ig, und 5 Mol-% der wiederkehrenden Struktureinheiten der Formel Id;
Punkt W entspricht 82,5 Mol-% der Summe der wiederkehrenden Struktureinheiten der Formel Ia und Ih, 12,5 Mol-% der wiederkehrenden Struktureinheiten der Formel Ig oder der Summe der wiederkehrenden Struktureinheit der Formeln Ii und Ig, und 5 Mol-% der wiederkehrenden Struktureinheit der Formel Id;
Punkt X entspricht 82,5 Mol-% der Summme der wiederkehrenden Struktureinheiten der Formel Ia und Ih, 2,5 Mol-% der wiederkehrenden Struktureinheit der Formel Ig oder der Summe der wiederkehrenden Struktureinheiten der Formeln Ii und Ig, und 15 Mol-% der wiederkehrenden Struktureinheit der Formel Id;
Punkt Y entspricht 60 Mol-% der Summe der wiederkehrenden Struktureinheiten der Formel Ia und Ih, 2,5 Mol-% der wiederkehrenden Struktureinheit der Formel Ig oder der Summe der wiederkehrenden Struktureinheiten der Formeln Ii und Ig, und 37,5 Mol-% der wiederkehrenden Struktureinheit der Formel Id;
Punkt Z entspricht 52,5 Mol-% der Summe der wiederkehrenden Struktureinheiten der Formel Ia und Ih, 22,5 Mol-% der wiederkehrenden Struktureinheit der Formel Ig oder der Summe der wiederkehrenden Struktureinheiten der Formeln Ii und Ig, und 25 Mol-% der wiederkehrenden Struktureinheit der Formel Id.

Bedeuten irgendwelche Substituenten in den Resten $Ar^1$, $Ar^2$, $Ar^3$, $Ar^4$, $Ar^5$ oder $Ar^6$ gegenüber Carbonsäurechloriden inerte Reste, so kann es sich dabei um einwertige anorganische Reste, wie Halogen, oder um einwertige, organische Reste, wie Alkyl, Alkoxy, Bis-(n-alkyl)-amino, Bis-(N-alkyl)-amido oder Nitrilgruppen handeln. Der Begriff "gegenüber Carbonsäurechloriden inerter Rest" bedeutet, daß diese Substituenten unter den Herstellungs- und Verarbeitungsbedingungen der erfindungsgemäßen Copolyamide praktisch nicht reagieren.

Bevorzugte inerte Reste sind Chlor oder $C_1$-$C_6$-Alkyl oder $C_1$-$C_6$-Alkoxy, insbesondere geradkettiges $C_1$-$C_6$-Alkyl oder Alkoxy. Beispiele dafür sind Methyl, Ethyl, n-Propyl, Isopropyl, n-Butyl, n-Pentyl und n-Hexyl oder Methoxy, Ethoxy, n-Propyloxy, Isopropyloxy, n-Butyloxy, n-Pentyloxy oder n-Hexyloxy.

Beispiele für Reste $R^1$ sind Chlor oder $C_1$-$C_6$-Alkyl oder $C_1$-$C_6$-Alkoxy, wie oben aufgezählt.

Besonders bevorzugte inerte Reste oder Reste $R^1$ sind Chlor, Methoxy oder Methyl.

Bedeuten irgendwelche Reste zweiwertige aromatische Reste, deren Valenzbindungen sich in para- oder in vergleichbarer koaxialer oder paralleler Stellung zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert oder über C-C-Bindungen oder über im wesentlichen lineare Brückengruppen, wie -O-, -S-, $-SO_2-$ oder -CO-NH-Gruppen linear miteinander verbunden sein.

Die Valenzbindungen, die in koaxialer oder paralleler zueinander befindlicher Stellung stehen, sind entgegengesetzt gerichtet. Ein Beispiel für koaxiale, entgegengesetzt gerichtete Bindungen sind die Diphenyl-4,4'-Bindungen. Ein Beispiel für parallele, entgegengesetzt gerichtete Bindungen sind z.B. die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Stellung zueinander befinden, sind einkernige aromatische Reste mit zueinander para-ständigen freien Valenzen, insbesondere 1,4-Phenylen, oder zweikernige kondensierte aromatische Reste mit parallelen, entgegengesetzt gerichteten Bindungen, insbesondere 1,4-, 1,5- und 2,6-Naphthylen, oder zweikernige über eine C-C-Bindung oder über eine -CO-NH-Gruppe verknüpfte aromatische Reste mit koaxialen, entgegengesetzt gerichteten Bindungen, insbesondere 4,4'-Biphenylen oder ein Rest des 4,4'-Diaminobenzanilids.

Besonders bevorzugte Reste $Ar^1$ und $Ar^5$ sind 1,4-Phenylen und der Rest des 4,4'-Diaminobenzanilids. $Ar^1$ ist vorzugsweise 1,4-Phenylen.

Bedeuten irgendwelche Reste zweiwertige aromatische Reste, deren Valenzbindungen sich in meta- oder in vergleichbarer gewinkelter Positioin zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie z.B. -O-, $-CH_2-$, -CO-NH-, -S-, -CO- oder $-SO_2-$ miteinander verknüpft sein.

Beispiele für mehrkernige Reste, deren Valenzbindungen sich in zur meta-Position vergleichbaren gewinkelten Position befinden, sind 1,6-Naphthylen, 2,7-Napthylen oder 3,4'-Biphenylen.

Ein bevorzugtes Beispiel für einen einkernigen aromatischen Rest dieses Typs ist 1,3-Phenylen.

Bevorzugte Reste der Formel Id sind solche, worin $R^1$ Chlor oder geradkettiges $C_1$-$C_6$-Alkyl, insbesondere Methyl, oder geradkettiges $C_1$-$C_6$-Alkoxy, insbesondere Methoxy bedeutet.

Die erfindungsgemäßen Polyamide können neben dem substituierten Rest Id unsubstituierte Reste und substituierte Reste nebeneinander in wechselnden Anteilen enthalten.

Dabei kann das Polyamid eine Art oder mehrere Arten substituierter Reste $Ar^1$, $Ar^2$, $Ar^3$, $Ar^4$, $Ar^5$ und/oder $Ar^6$ enthalten; z.B: kann es ausschließlich methylsubstituierte Reste oder es kann Anteile von Resten mit verschiedenen Alkylsubstituenten und/oder mit Halogensubstituenten enthalten.

Die erfindungsgemäßen Polyamide können aber auch neben dem substituierten Rest Id ausschließlich substituierte oder unsubstituierte Reste $Ar^1$, $Ar^2$, $Ar^3$, $Ar^4$, $Ar^5$ und/oder $Ar^6$ enthalten. Aus Kostengründen sind solche erfindungsgemäßen Polyamide bevorzugt, die neben Id nur unsubstituierte oder die bis zu ca. 30 Mol-% substituierte Reste, bezogen auf das Polymere, enthalten.

Neben den wiederkehrenden Struktureinheiten der Formeln Ia, Ib, Ic und Id (Variante I) oder der Formeln Ia, Ih, Id und Ig bzw. Ia, Ih, Ii, Id und Ig (Variante II), die jeweils zu mindestens 95 Mol-% in einem Polymermolekül vorliegen, können die erfindungsgemäßen Copolyamide bis zu 5 Mol-% nicht-aromatische Dicarbonsäure- und/oder Diamineinheiten der Formeln Ie bzw. If enthalten.

Dabei kann es sich z.B. um Reste von aliphatischen $\alpha,\omega$-Dicarbonsäuren oder $\alpha,\omega$-Diaminen handeln, wie z.B. um Reste der Adipinsäure oder Sebacinsäure oder des 1,6-Diaminohexans; es kann sich auch um Reste von cycloaliphatischen Dicarbonsäuren oder Diaminen handeln, wie z.B. um Reste der Hexahydrophthalsäure oder des Cyclohexan-1,4-diamins; oder es kann sich um Reste von araliphatischen Dicarbonsäuren oder Diaminen handeln, wie z.B. um Reste der Xylylendicarbonsäure oder des Xylylendiamins.

Auch diese Reste können gegebenenfalls gegenüber Carbonsäurechloriden inerte Substituenten aufweisen.

Im Falle der Copolyamide der Variante II kann als gewinkelte Komponente eine wiederkehrende Struktureinheit der Formel Ig oder der Formel Ii und Ig auftreten.

Die Mengen der eingesetzten Diamine sind nicht beliebig wählbar, sondern nur innerhalb bestimmter Molprozentbereiche, bezogen auf die gesamte Molmenge an Diaminkomponenten. Der erfindungsgemäß erforderliche Konzentrationsbereich ist durch die oben definierten Eckpunkte O, P, Q, R, S und T bzw. V, W, X, Y und Z gekennzeichnet; die Abgrenzung der Bereiche ist auch grafisch in den beigefügten Figuren 1 und 2 im Dreieckskoordinatensystem dargestellt worden.

Dabei beziehen sich die Mengenangaben zur Variante I jeweils auf die Anteile der zweiwertigen aromatischen Diaminreste, während sich die Mengenangaben zur Variante II auf die Anteile der zweiwertigen aromatischen Dicarbonsäurereste und der zweiwertigen aromatischen Diaminreste beziehen.

Geformte Gebilde aus aromatischen Copolyamiden gemäß der vorliegenden Erfindung werden insbesondere dann mit hervorragenden Eigenschaften erhalten, wenn die einzelnen Anteile der Diaminkomponenten zur Gesamtmenge der Diaminkomponenten in Mol-% innerhalb eines engeren Bereiches liegen, der durch die folgenden, auch in den Figuren 1 und 2 dargestellten, Eckpunkte definiert ist:

Punkt O' entspricht 55 Mol-% des Restes der Formel Ib, 30 Mol-% des Restes der Formel Ic und 15 Mol-% des Restes der Formel Id,
Punkt P' entspricht 60 Mol-% des Restes der Formel Ib, 25 Mol-% des Restes der Formel Ic und 15 Mol-% des Restes der Formel Id;
Punkt Q' entspricht 60 Mol-% des Restes der Formel Ib, 5 Mol-% des Restes der Formel Ic und 35 Mol-% des Restes der Formel Id;
Punkt R' entspricht 30 Mol-% des Restes der Formel Ib, 5 Mol-% des Restes der Formel Ic und 65 Mol-% des Restes der Formel Id,
Punkt S' entspricht 20 Mol-% des Restes der Formel Ib, 15 Mol-% des Restes der Formel Ic und 65 Mol-% des Restes der Formel Id,
Punkt T' entspricht 20 Mol-% des Restes der Formel Ib, 30 Mol-% des Restes der Formel Ic und 50 Mol-% des Restes der Formel Id; oder
Punkt V' entspricht 75 Mol-% der Summe der wiederkehrenden Struktureinheiten der Formel Ia und Ih, 20 Mol-% der wiederkehrenden Struktureinheit der Formel Ig oder der Summe der wiederkehrenden Struktureinheiten der Formeln Ii und Ig, und 5 Mol-% der wiederkehrenden Struktureinheit der Formel Id;
Punkt W' entspricht 80 Mol-% der Summe der wiederkehrenden Struktureinheiten der Formel Ia und Ih, 15 Mol-% der wiederkehrenden Struktureinheit der Formel Ig oder der Summe der wiederkehrenden Struktureinheiten der Formeln Ii und Ig, und 5 Mol-% der wiederkehrenden Struktureinheiten der Formel Id;
Punkt X' entspricht 80 Mol-% der Summe der wiederkehrenden Struktureinheiten der Formel Ia und Ih, 2,5 Mol-% der wiederkehrenden Struktureinheit der Formel Ig oder der Summe der wiederkehrenden Struktureinheiten der Formeln Ii und Ig, und 17,5 Mol-% der wiederkehrenden Struktureinheit der Formel Id;
Punkt Y' entspricht 62,5 Mol-% der Summe der wiederkehrenden Struktureinheiten der Formel Ia und Ih, 2,5 Mol-% der wiederkehrenden Struktureinheit der Formel Ig oder der Summe der wiederkehrenden Struktureinheiten der Formeln Ii und Ig und 35 Mol-% der wiederkehrenden Struktureinheit der Formel Id;
Punkt Z' entspricht 55 Mol-% der Summe der wiederkehrenden Struktureinheiten der Formel Ia und Ih, 20 Mol-% der wiederkehrenden Struktureinheit der Formel Ig oder der Summe der wiederkehrenden Struktureinheiten der Formeln Ii und Ig, und 25 Mol-% der wiederkehrenden Struktureinheit der Formel Id.

Die ausgezeichneten Eigenschaften der erfindungsgemäßen geformten Gebilde beruhen auf dem Einbau der wiederkehrenden Sturktureinheiten Ia, Ib, Ic und Id bzw. Ia, Ih, Id und Ig bzw. Ia, Ih, Ii, Id und Ig in den angegebenen Grenzen. Aromatische Polyamide mit einzelnen dieser wiederkehrenden Struktureinheiten sind allgemein bekannt. Sie zeigen keine überragenden Eigenschaften.

So ist z.B. die Verwendung der Aminkomponente Ib, d.h. z.B. p-Phenylendiamin und der Säurekomponente Ia, z.B. Terephthaloylchlorid, weitgehend bekannt und z.B. in der weiter oben zitierten Deutschen Patentschrift 22 19 703 beschrieben. Wie bereits oben ausgeführt, sind Polyamide, die nur diesen Aminbaustein zusammen mit einem aromatischen Dicarbonsäurerest aufweisen, in aprotischen Lösungsmitteln vom Amidtyp praktisch nicht mehr löslich. Eine Spinnlösung kann jedoch unter Verwendung von konzentrierter Schwefelsäure erhalten werden (DE-A-19 29 713).

Die Verwendung der Aminkomponenten Ic, d.h. z.B. m-Phenylendiamin ist allgemein bekannt. So sind Filamente aus m-Phenylenisophthalamid kommerziell erhältlich. Hierin ist auch die Verwendung von Säurekomponenten Ig, d.h. z.B. Isophthaloylchlorid enthalten.

Der Vorliteratur kann auch die Eignung von Benzidinen als aromatische Polyamidkomponente entnommen werden. Eine Spinnlösung ist unter Einsatz von rauchender Schwefelsäure möglich.

Als Cokomponente sind Benzidine u.a. in der EP-A-0 199 090 beschrieben. Dort ist auch beschrieben (Vergleichsversuch 6), daß ein Homopolyamid aus Terephthaloylchlorid und 3,3'.Dimethylbenzidin in dem Syntheselösungsmittel unlöslich ist und demzufolge hieraus nicht spinnbar ist.

Wie sich aus den genannten Schriften ergibt, weisen aus organischen Lösungen gesponnene Filamente der betreffenden Polyamide durchweg nur mäßige Eigenschaften auf, während Filamente aus Copolyamiden, die nach der vorliegenden Erfindung durch Verwendung von ausgewählten Diaminen und Dicarbonsäuren in bestimmten Anteilen hergestellt wurden, sich überraschenderweise durch hohe Festigkeit und hohe Löslichkeit auszeichnen. Die Filamente zeigen hohe Verstreckbarkeit.

Die erfindungsgemäßen Copolyamide können nach allen an sich bekannten Polykondensationsverfahren hergestellt werden. Zur Herstellung der Copolyamide enthaltend die wiederkehrenden Struktureinheiten Ia, Ib, Ic und Id und gegebenenfalls Ie und/oder If setzt man zweckmäßigerweise ein Dicarbonsäuredichlorid der Formel II und gegebenenfalls der Formel VII mit einem Gemisch der Diamine der Formeln III, IV und V und gegebenenfalls VI um

$ClOC-Ar^1-COCl$ (II), $H_2N-Ar^2-NH_2$ (III), $H_2N-Ar^3-NH_2$ (IV),

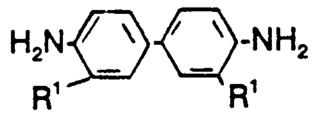 (V),

$H_2N-R^3-NH_2$ (VI), $ClOC-R^2-COCl$ (VII),

worin $Ar^1$ bis $Ar^3$ und $R^1$ bis $R^3$ die weiter oben definierte Bedeutung besitzen.

Zur Herstellung der Copolyamide enthaltend die wiederkehrenden Struktureinheiten Ia, Ih, Id und Ig und gegebenenfalls Ii und/oder Ie und/oder If setzt man ein Dicarbonsäuredichlorid der Formel II und gegebenenfalls VII, wie oben definiert, und ein Dicarbonsäuredichlorid der Formel VIII mit einem Gemisch der Diamine der Formeln IX und V und gegebenenfalls X und/oder VI, wie oben definiert, um

$ClOC-Ar^4-COCl$ (VIII), $H_2N-Ar^5-NH_2$ (IX), $H_2N-Ar^6-NH_2$ (X),

worin $Ar^4$, $Ar^5$ und $Ar^6$ die oben definierte Bedeutung besitzen.

Die Dicarbonsäuredichloride der Formeln II, VII und VIII sowie die Diamine der Formeln III, IV, V, VI, IX und X können auch in Form von Mischungen eingesetzt werden.

Die Mengenverhältnisse der Diamine IX, X und V bzw. IX und V, sind dabei jeweils so zu wählen, daß Polyamide mit den oben definierten Mengenanteilen entstehen.

Es ist für den Fachmann selbstverständlich, daß die Summe aller von aromatischen Säuren abgeleiteten Struktureinheiten und die Summe aller von aromatischen Aminen abgeleiteten Struktureinheiten im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Das Molekulargewicht der entstehenden Polyamide läßt sich unter anderem über die Auswahl der Mengenverhältnisse von aromatischen Säuren zu aromatischen Aminen steuern. Diese Auswahlkriterien sind dem Fachmann auf dem Gebiet der Polykondensation bekannt.

Beispiele für geeignete aromatische Dicarbonsäuredichloride der Formel II sind die Dichloride der 4,4'-Diphenylsuffondicarbonsäure, 4,4'-Diphenyletherdicarbonsäure, Naphthalin-1,4-dicarbonsäure, Naphthalin-1,5-dicarbonsäure, Naphthalin-2,6-dicarbonsäure, Diphenyl-4,4'-dicarbonsäure, 2-Chlorterephthalsäure und insbesondere der Terephthalsäure.

Beispiele für geeignete aromatische Dicarbonsäuredichloride der Formel VIII sind die Dichloride der Naphthalin-1,6-dicarbonsäure, Naphthalin-1,7-dicarbonsäure, Naphthalin-2,7-dicarbonsäure, Biphenyl-3,4'-dicarbonsäure und insbesondere der Isophthalsäure.

Ein Beispiel für ein geeignetes Diamin der Formel III ist p-Phenylendiamin.

Beispiele für geeignete Diamine der Formel IX sind Naphthalin-1,4-diamin, Naphthalin-1,5-diamin, Naphthalin-2,6-diamin und insbesondere 4,4'-Diaminobenzanilid und p-Phenylendiamin.

Ein Beispiel für ein geeignetes Diamin der Formel IV ist m-Phenylendiamin.

Beispiele für geeignete Diamine der Formel X sind Naphthalin-1,6-diamin, Naphthalin-1,7-diamin, Naphthalin-2,7-diamin, Diphenyl-3,4'-diamin, 3,4'-Daminobenzanilid, sowie 2,4-Diaminoanisol oder 3,5-Diaminobenzoesäurediethylamid und insbesondere m-Phenylendiamin.

Beispiele für geeignete Diamine der Formel V sind 3,3'-Dichlorbenzidin, 3,3'-Dimethoxybenzidin und insbesondere 3,3'-Dimethylbenzidin.

Die Copolykondensation der oben beschriebenen monomeren Verbindungen wird üblicherweise als Lösungpolykondensation durchgeführt.

Dazu werden die miteinander umzusetzenden monomeren Verbindungen in der Regel in einem organischen Lösungsmittel gelöst. Das organische Lösungsmittel enthält dabei vorzugsweise zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N,N'-Dimethylpropylenharnstoff.
Für das erfindungsgemäße Verfahren sind die bevorzugten organischen Lösungsmittel N-Methyl-2-pyrrolidon, N,N-Dimethylacetamid und eine Mischung dieser Verbindungen von Bedeutung.

Bei einer bevorzugten Form der Durchführung der Lösungspolykondensation werden die aromatischen monomeren Diamine in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Copolykondensation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolykondensation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Copolymerisationsmischung vor, während oder nach der Copolymerisation zugesetzt wird. Beispiele für solche Zusatzstoffe sind Alkalimetallverbindungen, wie Lithiumchlorid oder Erdalkaliverbindungen wie Kalziumchlorid. Die Alkalimetall- oder Erdalkalimetallverbindungen wirken dabei als die Löslichkeit des entstehenden bzw. erhaltenen Copolyamids fördernde Zusatzstoffe.

Die Polykondensationstemperaturen liegen bei der Lösungspolymerisation üblicherweise zwischen -20 °C und + 120 °C, bevorzugt zwischen + 10 °C und + 100 °C. Besonders gute Ergebnisse werden bei Verwendung von N-Methylpyrrolidon bei Reaktionstemperaturen zwischen + 10 °C und + 80 °C erzielt.

Polykondensationsreaktionen werden vorzugsweise so ausgeführt, daß nach Abschluß der Reaktion 2 bis 15, vorzugsweise 3,5 bis 10 Gew.-% an Polykondensat in der Lösung vorliegen. Besonders gute Ergebnisse werden bei Konzentrationen von 5,0 bis 7,5 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von ca. 3,5 bis 6,6 dl/g entspricht; die Obergrenze der Viskosität entspricht vorzugsweise 6,0 dl/g.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/dl.

Sie wird für die Zwecke der vorliegenden Erfindung bestimmt an Lösungen von jeweils 0,5 g Polymer in 100 ml 98 Gew.-%iger Schwefelsäure bei 25 °C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Benzoylchlorid oder Acetylchlorid gestoppt werden. Anschließend kann der entstandene und locker an das Amidlösungsmittel gebundene Chlorwasserstoff durch Zugabe basischer Substanzen neutralisiert werden. Geeignet sind dafür beispielsweise Lithiumhydroxyd, Calciumhydroxyd, insbesondere aber Calciumoxid.

Das bei Durchführung des erfindungsgemäßen Verfahrens erhaltene aromatische Copolyamid kann aus dem Copolymerisationsgemisch durch ein Trennverfahren abgeschieden werden, beispielsweise durch Präzipitation. Zur Herstellung einer Lösung für das Ausformen des Copolyamids wird das so gewonnene Copolyamid dann in einem geeigneten organischen Lösungsmittel gelöst, wobei dieses Verfahren als

Auflösungsverfahren zur Herstellung der Ausformlösung bezeichnet wird.

In den Fällen, in denen zur Herstellung des Copolyamids gemäß der Erfindung das Verfahren der Lösungspolykondensation angewandt wird, wird das Copolyamid, weil es in dem Lösungsmittel für die Polykondensation hervorragend löslich ist, in diesem jedoch vollständig gelöst. Daher ist es bei industriellem Einsatz des erfindungsgemäßen Verfahrens vorteilhaft, daß bei der Polykondensation erhaltene Gemisch sofort als Ausformlösung für das aromatische Copolyamid zu verwenden.

Das Copolyamid gemäß der Erfindung ist in einem organischen Lösungsmittel, beispielsweise in organischen Lösungsmitteln vom Amidtyp hervorragend löslich und besitzt eine hervorragende Wärmebeständigkeit und eine überlegene chemische Widerstandsfähigkeit. Das erfindungsgemäße Copolyamid ist besonders nützlich für die Herstellung von verschiedenen geformten Artikeln, beispielsweise Fäden, Fasern, Faserpulp, Filamenten, Filmen und Folien, die ebenfalls ein Gegenstand der Erfindung sind. Diese Gebilde besitzen nicht nur eine hervorragende Wärmebeständigkeit und chemische Beständigkeit, sondern weisen auch überlegene mechanische Eigenschaften auf, beispielsweise hinsichtlich der Zugfestigkeit und des Elastizitätsmoduls. Die Lösung des Copolyamids kann ebenfalls auf unterschiedliche Weise verwendet werden, beispielsweise zur Produktion von Fasern, Folien, blattförmigen Elementen, Faserstoffen und anderen geformten Artikeln.

Bei dem Verfahren zum Herstellen der Ausformlösung des aromatischen Copolyamids wird als Lösungsmittel vorzugsweise ein Lösungsmittel vom Amidtyp verwendet, insbesondere die weiter oben genannten Lösungsmittel vom Amidtyp bzw. eine Mischung von zwei oder mehr der genannten Verbindungen.

Für die Herstellung der Ausformlosung ist es vorteilhaft, wenn die Konzentration des aromatischen Copolyamids in einem Bereich zwischen 4 und 20 Gew.-%, insbesondere zwischen 6 und 12 Gew.-% gehalten wird. Wenn es erforderlich ist, kann die Ausformlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Kalziumchlorid oder Magnesiumbromid, und zwar in einer Konzentration zwischen 0,2 und 10 %, vorzugsweise zwischen 0,5 und 5 %, bezogen auf das Gesamtgewicht der Ausformlösung. Der Zusatzstoff zur Förderung der Löslichkeit fördert dabei auch die Stabilität der Ausformlösung bei erhöhter Temperatur.

Das Ausformen der Ausformlösung zu einem geformten Artikel kann nach jedem geeigneten Trockenverfahren, Naßverfahren oder Trocken-Naß-Verfahren erfolgen. In den Fällen, in denen ein Naßverfahren angewandt wird, um die Ausformlösung beispielsweise zu Filamenten auszuformen, wird die Ausformlösung oder - in diesem Fall - die Spinnlösung durch eine Düse, beispielsweise eine Spinndüse, in eine koagulierende Flüssigkeit extrudiert. Dabei ist es gewöhnlich vorteilhaft, wenn die Koagulationsflüssigkeit aus Wasser oder aus einer wäßrigen, ein polares organisches Lösungsmittel enthaltenden Lösung besteht. Dabei kann das polare organische Lösungsmittel unter denselben Amid-Lösungsmitteln ausgewählt werden, die gewöhnlich für das Lösen des aromatischen Copolyamids verwendet werden. Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0 °C und der Siedetemperatur der Koagulationsflüssigkeit bei Atmosphärendruck eingesetzt. Das polare organische Lösungsmittel liegt in der Koagulationsflüssigkeit vorzugsweise in einer Konzentration zwischen 50 Gew.-% und weniger vor, insbesondere zwischen 30 Gew.-% und weniger.

Wenn das Copolyamid in der Ausformlösung eine gewisse Zusammensetzung aufweist oder wenn die Ausformlösung gewisse Typen von Metallhalogeniden und/oder Wasserstoffhalogeniden in einer gewissen Menge enthält, tritt in einigen Fällen eine übermäßige Diffusion der Koagulationsflüssigkeit in den extrudierten Strom der Ausformlösung ein, die häufig unerwünscht ist. Diese Erscheinung führt dazu, daß der durch Koagulation geformte Gegenstand eine lockere, interne Struktur besitzt, so daß seine mechanische Festigkeit so gering ist, daß er nicht glatt abgezogen werden kann, ohne daß es zu Materialbrüchen kommt. In einem solchen Fall ist es vorteilhaft, wenn die Koagulationsflüssigkeit einen Zusatzstoff enthält, der die Koagulation verlangsamt, wobei als Zusatzstoff mindestens einer der folgenden Stoffe verwendet werden kann: Lithiumchlorid, Natriumchlorid, Kalziumchlorid, Magnesiumchlorid Zinkchlorid, Strontiumchlorid, Aluminiumchlorid, Zinn-II-chlorid, Nickelchlorid, Kalziumbromid, Kalziumnitrat, Zinknitrat, Aluminiumnitrat. Als Koagulations-Zusatzstoffe sind dabei Magnesiumchlorid, Kalziumchlorid, Zinkchlorid und Aluminiumchlorid besonders günstig.

Das vorstehend erläuterte Ausformverfahren ist besonders für die Herstellung von Folien oder Filamenten aus einer Ausformlösung geeignet.

Bei der Herstellung von Filamenten aus dem erfindungsgemäßen Copolyamid wird die Ausform- bzw. Spinnlösung durch einen Spinnkopf mit mehreren Spinnöffnungen extrudiert, wobei die filamentförmigen Ströme der Spinnlösung in einer der oben angegebenen Koagulationsflüssigkeiten verfestigt werden

(Naßverfahren) oder in einer die Verdampfung fördernden Atmosphäre (Trockenverfahren). Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt. Eine ebenfalls geeignete Variante ist das sogenannte "Trockendüsen-Naßspinnverfahren", wie es z.B. in der US-A-3 414 645 beschrieben ist.

Beim Naßspinnen eines aromatischen Copolyamids gemäß der Erfindung erfolgt die Koagulation vorzugsweise unter Verwendung einer Koagulationsflüssigkeit mit Zusatzstoff zur Koagulationsförderung, wobei sich an die chemische Koagulation ein weiterer Koagulationsschritt anschließt, in dessen Verlauf die koagulierenden Filamente des Copolyamids in ein Wasserbad eingeleitet werden, welches auf einer Temperatur zwischen 0 und 100 °C gehalten wird. Der zusätsliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filamenten ausgewaschen.

Aus der vorstehenden Beschreibung wird deutlich, daß das erfindungsgemäße Copolyamid unter Verwendung üblicher Spinnverfahren und -vorrichtungen ohne weiteres zu Filamenten verarbeitet werden kann, ohne daß ein gefährliches oder schädliches Lösungsmittel, wie z.B. konzentrierte Schwefelsäure, verwendet werden müßte. Hierdurch werden die Gefahren für das Bedienungspersonal verringert. Außerdem haben die aus dem erfindungsgemäßen Copolyamid hergestellten Filamente eine dichte interne Struktur.

Die Ausformlösung kann auch unter Verwendung üblicher Auffächerungs- oder Extrudierverfahren zu einem Film bzw. einer Folie verarbeitet werden.

Filamente oder Folien, die nach den vorstehend angegebenen Ausformverfahren hergestellt werden, werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Filamente oder Folien.

Filamente aus den erfindungsgemäßen Copolyamiden werden in der Regel verstreckt, um eine hohe mechanische Festigkeit und einen hohen Elastizitätsmodul zu erzielen. Das Verstreckungsverhältnis beträgt dabei üblicherweise etwa 1:3 bis 1:25, vorzugsweise etwa 1:8 bis 1:20. Die Verstrecktemperatur liegt dabei in der Regel zwischen 250 und 420 °C, vorzugsweise zwischen 330 und 410 °C. Die niedrigere Arbeitstemperatur führt zu einem niedrigeren Energiebedarf für den Streckvorgang, der problemlos ausgeführt werden kann.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente oder Folien einer weiteren Wärmebehandlung bei gleicher oder höherer Temperatur unterworfen werden, um ihre kristalline Struktur zu fördern. In diesem Zusammenhang sei darauf hingewiesen, daß das Copolyamid gemäß der Erfindung nicht nur hinsichtlich seiner Lösbarkeit in üblichen organischen Lösungsmitteln überraschend vorteilhaft ist, sondern nach der Herstellung der Filamente oder Folien ohne weiteres unter "milden" Arbeitsbedingungen verstreckt werden kann.

Die erfindungsgemäßen Formkörper, wie Filamente, Fasern, Faserpulp, Folien oder Membranen aus einem Copolyamid gemäß der Erfindung, welche hervorragende mechanische und thermische Eigenschaften besitzen, können auf die verschiedenste Weise industriell eingesetzt werden, beispielsweise als Verstärkungsmaterialien für die Gewebeeinlagen von Autoreifen und anderen Gummiartikeln sowie Gegenständen aus thermoplastischen und/oder wärmehärtenden Harzen, als wärmebeständige Isolationsmaterialien, zur Herstellung von Filtergeweben und als leichte Dämmstoffe. Außerdem können Filme oder Folien aus einem Copolyamid gemäß der Erfindung als Membranen zur Stofftrennung oder als wärmebeständige elektrische Isolationsmaterialien eingesetzt werden. Für Isolationszwecke ist es auch möglich, eine Polymerlösung auf einen anderen Körper als Film aufzutragen und dann eine Entfernung der gegebenenfalls anwesenden Lösungsmittel vorzunehmen.

Weitere Eigenschaften und Vorteile der Erfindung werden nachstehend anhand von Beispielen noch näher erläutert. Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

Die Anteile an Dicarbonsäurekomponenten und Diaminkomponenten wurden jeweils zu 100 Mol.-% berechnet. Die inhärenten Viskositäten wurden wie bereits oben angegeben bestimmt.

**Beispiel 1**

Aromatisches Copolyamid aus 100 Mol.-% Terephthaloylchlorid, 50 Mol.-% 3,3'-Dimethylbenzidin, 25 Mol.-% p-Phenylendiamin und 25 Mol.-% m-Phenylendiamin.

339,7 g (1,6 Mol) 3,3'-Dimethylbenzidin, 86,5 g (0,8 Mol) p-Phenylendiamin und 86,5 g (0,8 Mol) m-Phenylendiamin werden unter Stickstoff in 13,77 l trockenem N-Methylpyrrolidon gelöst und zwischen 29 und 55,4 °C innerhalb von 31 Minuten mit 648 g (3,19 Mol) pulv. Terephthaloylchlorid umgesetzt. Man stoppt den Molekulargewichts-Anstieg durch Zugabe von 5,0 g (0,064 Mol) Acetylchlorid. Man neutralisiert mit 296 g einer 65-prozentigen Suspension von Kalziumoxid (96 % CaO) in N-Methylpyrrolidon und heizt innerhalb von einer Stunde auf 110 °C auf.

Die Lösung enthält 6 % Copolyamid und 2,3 % $CaCl_2$. Das gelöste Polyamid hat eine inhärente Viskosität von 6,00 dl/g.

Die Lösung wird filtriert, entgast und nach einem sogenannten "Trockendüsen-Naßspinnprozeß" versponnen. Dazu wird sie durch eine Spinndüse mit 100 Löchern von je 0,15 mm Durchmesser, die sich in einem Abstand von 40 mm über dem Fällbad befindet, von oben nach unten gesponnen. Das Fällbad hat eine Temperatur von 80 °C und besteht aus einer Lösung von 35 % N-Methylpyrrolidon in Wasser. Die Abzugsgeschwindigkeit beträgt 10 m/Min. Die Filamente werden durch Waschbäder dann über Trockengaletten (120 °C, 160 °C, 240 °C) und schließlich über vier Bügeleisen von 350 °C, 370 °C, 390 °C und 390 °C gezogen und mit 240,4 m/Min abgezogen. Dabei wird hier, wie in den folgenden Beispielen, die Abzugsgeschwindigkeit so bemessen, daß sich für die Filamente ein Verstreckungsverhältnis von ca. 80 % des maximalen Verstreckverhältnisses ergibt. Anschließend wird das Multifilamentgarn hier und und in den folgenden Beispielen mit Schutzdrall entsprechend $\alpha_m$ = 30 (DIN 53 832, Teil 1) versehen und anschließend geprüft.

In Beispiel 1 beträgt der Einzelfilamenttiter 1,32 dtex (DIN 53 830), die feinheitsbezogene Höchstzugkraft 159 cN/tex bei einer Höchstzugkraftdehnung von 3,4 % (DIN 53 834, Teil 1). Der Anfangsmodul ist 55 N/tex. Es wird aus der Steigung des Kraft-Dehnungs-Diagramms zwischen 0,3 und 0,5 % Dehnung ermittelt.

Dieser Versuch wurde wiederholt unter Verwendung derselben Monomerzusammensetzung der Spinnlösung, aber mit einem Gehalt von 7 % Polymer und 2,7 % Kalziumchlorid. Die inhärente Viskosität des isolierten Polymers betrug 4,86 dl/g. Die Verspinnung erfolgte in derselben Weise wie oben, die Bügeleisentemperaturen betrugen jedoch 330, 350, 370 und 370 °C. Die Gesamtverstreckung betrug das 11,4-fache. Die Filamente zeigten folgende Eigenschaften: Einzeltiter 1,83 dtex, Festigkeit 135 cN/tex; Dehnung 3,3 % und Anfangsmodul 52 N/tex.

In derselben Weise wurde eine Polymerlösung derselben Monomerzusammensetzung hergestellt, die aber 8 % Polymer und 3,1 % Kalziumchlorid enthielt. Die inhärente Viskosität des isolierten Polymers betrug 4,12 dl/g. Die Polymerlösung wurde nach einem Naßspinnprozeß, bei dem die Düse sich im Koagulationsbad befindet, versponnen und bei Bügeleisentemperaturen von 360, 380 und 400 °C verstreckt. Die Verstreckung war 9,6-fach und ergab Filamente mit folgenden Eigenschaften:
Einzeltiter 1,79 dtex; Reißfestigkeit 129 cN/tex; Reißdehnung 3,3 %; Anfangsmodul 51 N/tex.

**Beispiele 2 bis 11**

Analog Beispiel 1, jedoch unter den in der Tabelle angegebenen Reaktionsbedingungen und unter Einsatz der dort genannten Ausgangsmaterialien wurden weitere erfindungsgemäße aromatische Polyamide hergestellt und zu Filamenten verarbeitet.

In der Tabelle werden folgende Abkürzungen verwendet:
TPC = Terephthaloylchlorid;
IPC = Isophtaloylchlorid;
PPD = p-Phenylendiamin;
MPD = m-Phenylendiamin;
DMB = 3,3'-Dimethylbenzidin;
DCIB = 3,3'-Dichlorbenzidin;
DMOB = 3,3'-Dimethoxybenzidin;
NMP = N-Methylpyrrolidon;
N = Naßspinnen;
TN = Trocken-Naß-Spinnen.

| Beispiel | | 2 | 3 | 4 |
|---|---|---|---|---|
| TPC | Mol | 3,19 | 3,39 | 3,19 |
| | Mol-% | 99,7 | 99,7 | 99,7 |
| | g | 648 | 688,2 | 647,7 |
| IPC | Mol | - | - | - |
| | Mol-% | - | - | - |
| | g | - | - | - |
| PPD | Mol | 1,12 | 1,19 | 1,28 |
| | Mol-% | 35 | 35 | 40 |
| | g | 121,1 | 128,6 | 138,4 |
| MPD | Mol | 0,64 | 0,68 | 0,64 |
| | Mol-% | 20 | 20 | 20 |
| | g | 69,2 | 73,5 | 69,2 |
| DMB | Mol | 1,44 | 1,53 | 1,28 |
| | Mol-% | 45 | 45 | 40 |
| | g | 305,7 | 324,8 | 271,7 |
| Sonstiges | | - | | |
| | Mol | - | - | - |
| | Mol-% | - | - | - |
| | g | | - | - |

| Beispiel | 2 | 3 | 4 |
|---|---|---|---|
| NMP g | 13 923 | 10 758 | 13 662 |
| Reaktionstemp. °C | 29,9-53,1 | 30,9-49,4 | 30,1-55,7 |
| Reaktionszeit Min. | 25 | 11 | 28 |
| Acetylchlorid g | 5,0 | 5,3 | 5,0 |
| CaO[1] g | 296 | 315 | 296 |
| Polymerkonz. % | 6 | 8 | 6 |
| $CaCl_2$-Konz. % | 2,34 | 3,12 | 2,38 |
| Polymerviskosität $\eta_{inh}$ | 5,84 | 4,02 | 5,25 |
| Spinnverfahren | N | N | TN |
| Spinnlösungstemp. °C | 100 | 100 | 100 |
| Düsen-Lochzahl | 100 | 100 | 100 |
| Düsen-Lochdurchmesser mm | 0,15 | 0,15 | 0,15 |
| Abstand Düse-Fällbad mm | / | / | 40 |
| Fällbadzusammensetzung % NMP | 35 | 35 | 35 |
| Fällbadtemperatur °C | 80 | 80 | 80 |
| Abzugsgeschwindigkeit m/Min | 12 | 16 | 12 |
| Trockengalettentemp. °C | 120,160,280 | 120,160 | 120,160,280 |
| Bügeleisentemperatur °C | 320-360 | 320-360 | 320-360 |
| Abzugsgeschwindigkeit m/Min | 150,3 | 107,8 | 90,0 |
| Einzeltiter dtex | 1,43 | 1,55 | 1,75 |
| Feinheitsfestigkeit cN/tex | 196 | 158 | 165 |
| Dehnung % | 3,8 | 3,0 | 3,4 |
| Anfangsmodul N/tex | 63 | 65 | 57 |

[1]65-prozentige Suspension von 96-proz. CaO in NMP

| Beispiel | | 5 | 6 | 7 |
|---|---|---|---|---|
| TPC | Mol | 3,19 | 2,55 | 3,23 |
| | Mol-% | 99,7 | 79,7 | 100,9 |
| | g | 647,7 | 518,2 | 655,7 |
| IPC | Mol | - | 0,64 | - |
| | Mol-% | - | 20 | - |
| | g | - | 129,9 | - |
| PPD | Mol | 1,28 | 1,44 | 1,28 |
| | Mol-% | 40 | 45 | 40 |
| | g | 138,4 | 155,7 | 138,4 |
| MPD | Mol | 0,48 | - | 0,64 |
| | Mol-% | 15 | - | 20 |
| | g | 51,9 | - | 69,2 |
| DMB | Mol | 1,44 | 1,76 | - |
| | Mol-% | 45 | 55 | - |
| | g | 305,7 | 373,6 | - |
| Sonstiges | | | | DCIB |
| | Mol | - | - | 1,28 |
| | Mol-% | - | - | 40 |
| | g | - | - | 324,0 |

| Beispiel | 5 | 6 | 7 |
|---|---|---|---|
| NMP g | 13 940 | 14 443 | 14 485 |
| Reaktionstemp. °C | 29,3-55,5 | 31,3-54,9 | 29,7-59,3 |
| Reaktionszeit Min. | 27 | 28 | 70 |
| Acetylchlorid g | 5,0 | 5,0 | |
| CaO[1] g | 29,6 | 296 | 296 |
| Polymerkonz.-% | 6 | 6 | 6 |
| $CaCl_2$-Konz. % | 2,34 | 2,26 | 2,25 |
| Polymerviskosität $\eta_{inh}$ | 5,43 | 5,05 | 4,96 |
| Spinnverfahren | TN | TN | TN |
| Spinnlösungstemp. °C | 100 | 100 | 100 |
| Düsen-Lochzahl | 100 | 100 | 100 |
| Düsen-Lochdurchmesser mm | 0,15 | 0,15 | 0,15 |
| Abstand Düse-Fällbad mm | 40 | 40 | 40 |
| Fällbadzusammensetzung % NMP | 35 | 35 | 35 |
| Fällbadtemperatur °C | 80 | 80 | 80 |
| Abzugsgeschwindigkeit m/Min | 12 | 14 | 14 |
| Trockengaletten °C | 140,240 | 120,160, 240 | 120,240 |
| Bügeleisentemp. °C | 350-390 | 320-360 | 300-340 |
| Abzugsgeschwindigkeit m/Min | 96,6 | 85,6 | 80,0 |
| Einzeltiter dtex | 3,97 | 2,20 | 2,04 |
| Feinheitsfestigkeit cN/tex | 170 | 156 | 132 |
| Dehnung % | 3,5 | 2,8 | 3,4 |
| Anfangsmodul N/tex | 59 | 64 | 50 |

[1] 65-prozentige Suspension von 96-proz. CaO in NMP

| Beispiel | | 8 | 9 | 10 |
|---|---|---|---|---|
| TPC | Mol | 0,8 | 2,8 | 3,19 |
| | Mol-% | 100 | 100 | 99,7 |
| | g | 162,4 | 568,3 | 647,7 |
| IPC | Mol | | | |
| | Mol-% | | | |
| | g | | | |
| PPD | Mol | 0,28 | 1,54 | 1,28 |
| | Mol-% | 35 | 55 | 40 |
| | g | 30,3 | 166,5 | 138,4 |
| MPD | Mol | - | 0,7 | 0,64 |
| | Mol-% | - | 25 | 20 |
| | g | - | 75,7 | 69,2 |
| DBM | Mol | 0,36 | 0,56 | - |
| | Mol-% | 45 | 20 | - |
| | g | 76,4 | 118,9 | - |
| Sonstiges | | 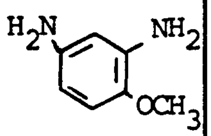 | - - | DMOB |
| | Mol | 0,16 | - | 1,28 |
| | Mol-% | 20 | | 40 |
| | g | 22,1 | | 312,7 |

| Beispiel | 8 | 9 | 10 |
|---|---|---|---|
| NMP g | 3 908 | 13 457 | 14 304 |
| Reaktionstemp. °C | 13-64 | 30,8-57,7 | 30,1-50,1 |
| Reaktionszeit Min | 33 | 49 | 14 |
| Acetylchlorid g | 1,3 | 4,4 | 5,0 |
| CaO[1] g | 74 | 259 | 296 |
| Polymerkonz. % | 5,5 | 5 | 5 |
| $CaCl_2$-Konz. % | 2,10 | 2,14 | 2,28 |
| Polymerviskosität $\eta_{inh}$ | 4,62 | 5,86 | 5,81 |
| Spinnverfahren | N | TN | TN |
| Spinnlösungstemp. °C | 100 | 100 | 100 |
| Düsen-Lochzahl | 100 | 100 | 100 |
| Düsen-Lochdurchmesser mm | 0,10 | 0,15 | 0,15 |
| Abstand Düse-Fällbad mm | / | 20 | 40 |
| Fällbadzusammensetzung % NMP | 35 | 35 | 35 |
| Fällbadtemp. °C | 80 | 80 | 80 |
| Abzugsgeschwindigkeit m/Min | 16 | 16 | 16 |
| Trockengalettentemp. °C | 120,160,240 | 120,160,240 | 120,160,240 |
| Bügeleisentemp. °C | 320-360 | 350-390 | 240-330 |
| Abzugsgeschwindigkeit m/Min | 111,4 | 98,7 | 87,4 |
| Einzeltiter dtex | 1,49 | 1,86 | 2,36 |
| Feinheitsfestigkeit cN/tex | 131 | 148 | 124 |
| Dehnung % | 3,2 | 3,5 | 3,6 |
| Anfangsmodul N/tex | 53 | 49 | 44 |

[1] 65-prozentige Suspension von 96-proz. CaO in NMP

| Beispiel | | 11 |
|---|---|---|
| TPC | Mol | 0,36 |
| | Mol-% | 100 |
| | g | 73,1 |
| IPC | Mol | - |
| | Mol-% | - |
| | g | - |
| PPD | Mol | 0,108 |
| | Mol-% | 30 |
| | g | 11,7 |
| MPD | Mol | - |
| | Mol-% | - |
| | g | - |
| DBM | Mol | 0,216 |
| | Mol-% | 60 |
| | g | 45,85 |
| Sonstiges | | 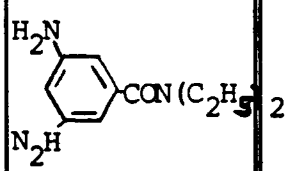 |
| | Mol | 0,036 |
| | Mol-% | 10 |
| | g | 7,46 |

| Beispiel | 11 |
|---|---|
| NMP g | 2 084 |
| Reaktionstemp. °C | 9-70 |
| Reaktionszeit Min | 102 |
| | |
| Acetylchlorid g | 0,6 |
| CaO[1] g | 33,5 |
| Polymerkonz. % | 5 |
| $CaCl_2$-Konz. % | 1,79 |
| Polymerviskosität $\eta_{inh}$ | 6,10 |
| Spinnverfahren | N |
| Spinnlösungstemp. % | 100 |
| Düsen-Lochzahl | 100 |
| Düsen-Lochdurchmesser mm | 0,15 |
| Abstand Düse-Fällbad mm | / |
| Fällbadzusamensetzung % NMP | 35 |
| Fällbadtemp. °C | 80 |
| Abzugsgeschwindigkeit m/Min | 16 |
| Trockengalettentemp. °C | 120,160,240 |
| Bügeleisentemp. °C | 340-390 |
| Abzugsgeschwindigkeit m/Min | 115,3 |
| Einzeltiter dtex | 1,66 |
| Feinheitsfestigkeit cN/tex | 126 |
| Dehnung % | 2,5 |
| Anfangsmodul N/tex | 61 |

[1] 65-prozentige Suspension von 96-proz. CaO in NMP

**Patentansprüche**

**1.** In organischen Polyamid-Lösungsmittel lösliche Copolyamide mit einer inhärenten Viskosität, gemessen an Lösungen von 0,5 g Polyamid in 100 ml 98 %iger Schwefelsäure bei 25 °C, von etwa 3,5 bis

6,6 dl/g enthaltend die wiederkehrenden Struktureinheiten der Formeln Ia, Ib, Ic und Id und gegebenenfalls die wiederkehrenden Struktureinheiten der Formel Ie und/oder If

$-OC-Ar^1-CO-$ (Ia),
$-NH-Ar^2-NH-$ (Ib),
$-NH-Ar^3-NH-$ (Ic),

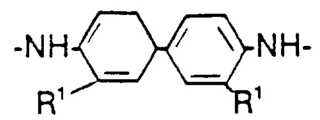
(Id),

$-OC-R^2-CO-$ (Ie),
$-NH-R^3-NH-$ (If),

worin die Summe der wiederkehrenden Struktureinheiten der Formeln Ia, Ib, Ic und Id mindestens 95 Mol-% beträgt und die wiederkehrenden Struktureinheiten der Formeln Ie und/oder If bis zu 5 Mol-% betragen können und der Molanteil der wiederkehrenden Struktureinheiten der Formeln Ia und gegebennefalls Ie etwa dem Molanteil der wiederkehrenden Struktureinheiten Ib, Ic, Id und gegebenenfalls If entspricht,
worin $Ar^1$ ein zweiwertiger aromatischer Rest ist, dessen Valenzbindungen in para- oder in vergleichbarer koaxialer oder paralleler Stellung zueinander stehen, der gegebenenfalls ein oder mehrere gegenüber Carbonsäurechloriden inerte Substituenten aufweist,
$Ar^2$ 1,4-Phenylen ist,
$Ar^3$ 1,3-Phenylen ist, wobei $Ar^2$ und/oder $Ar^3$ gegebenenfalls ein oder mehrere gegenüber Carbonsäurechloriden inerte Substituenten aufweisen,
$R^1$ einen $C_1$-$C_6$ Alkylrest, einen $C_1$-$C_6$ Alkoxyrest oder ein Halogenatom bedeutet,
$R^2$ einen zweiwertigen aliphatischen, cycloaliphatischen oder araliphatischen Rest darstellt und
$R^3$ eine der für $R^2$ definierten Bedeutungen aufweist, mit der Maßgabe, daß die Reste $Ar^1$, $Ar^2$, $Ar^3$, $R^1$, $R^2$ und $R^3$ innerhalb eines Polymermoleküls innerhalb der gegebenen Definitionen unterschiedlich sein können und daß die Mengenanteile der wiederkehrenden Struktureinheiten der Formeln Ib, Ic und Id, bezogen auf die Gesamtmenge dieser Struktureinheiten, so gewählt werden, daß sie innerhalb der Eckpunkte des folgenden Bereichs liegen:
Punkt O entspricht 45 Mol-% des Restes der Formel Ib, 40 Mol-% des Restes der Formel Ic und 15 Mol-% des Restes der Formel Id;
Punkt P entspricht 65 Mol-% des Restes der Formel Ib, 20 Mol-% des Restes der Formel Ic und 15 Mol-% des Restes der Formel Id;
Punkt Q enspricht 65 Mol-% des Restes der Formel Ib, 5 Mol-% des Restes der Formel Ic und 30 Mol-% des Restes der Formel Id;
Punkt R entspricht 30 Mol-% des Restes der Formel Ib, 5 Mol-% des Restes der Formel Ic und 65 Mol-% des Restes der Formel Id;
Punkt S entspricht 20 Mol-% des Restes der Formel Ib, 15 Mol-% des Restes der Formel Ic und 65 Mol-% des Restes der Formel Id; und
Punkt T enspricht 20 Mol-% des Restes der Formel Ib, 40 Mol-% des Restes der Formel Ic und 40 Mol-% des Restes der Formel Id.

**2.** In organischen Polyamid-Lösungsmitteln lösliche Copolyamide mit einer inhärenten Viskosität, gemessen an Lösungen von 0,5 g Polyamid in 100 ml 98 %iger Schwefesäure bei 25 °C, von etwa 3,5 bis 6,6 dl/g enthaltend die wiederkehrenden Struktureinheiten der Formeln Ia, Ih, Id und Ig und gegebenenfalls die wiederkehrenden Struktureinheiten der Formeln Ii und/oder Ie und/oder If,

$-OC-Ar^1-C-$ (Ia),
$-NH-Ar^5-NH-$ (Ih),
$-NH-Ar^6-NH-$ (Ii),

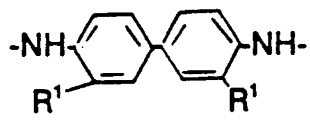 (Id),

-OC-$R^2$-CO- (Ie),
-NH-$R^3$-NH- (If),
-OC-$Ar^4$-CO- (Ig),

worin die Summe der wiederkehrenden Struktureinheiten der Formeln Ia, Ih, Id und Ig und gegebenenfalls Ii mindestens 95 Mol-% beträgt und die wiederkehrenden Struktureinheiten der Formeln Ie und/oder If bis zu 5 Mol-% betragen können und der Molanteil der wiederkehrenden Struktureinheiten der Formeln Ia und Ig und gegebenenfalls Ie etwa den Molanteil der wiederkehrenden Struktureinheiten Ih und Id und gegebenenfalls Ii und/oder If entspricht,
worin $Ar^1$, $R^1$, $R^2$ und $R^3$ die in Anspruch 1 definierte Bedeutung besitzen, $Ar^4$ und $Ar^6$ zweiwertige aromatische Reste sind, deren Valenzbindungen in meta- oder in vergleichbarer gewinkelter Stellung zueinander stehen, die gegebenenfalls ein oder mehrere gegenüber Carbonsäurechloriden inerte Substituenten aufweisen, und $Ar^5$ eine der für $Ar^1$ definierten Bedeutungen aufweist, mit der Maßgabe, daß die Reste $Ar^1$, $Ar^5$, $Ar^6$, $Ar^4$, $R^1$, $R^2$ und $R^3$ innerhalb eines Polymermoleküls innerhalb der gegebenen Definitionen unterschiedlich sein können und daß die Mengenanteile der wiederkehrenden Struktureinheiten der Formeln Ia, Ih, Id und Ig und gegebenenfalls Ii, bezogen auf die Gesamtmenge dieser Strucktureinheiten, so gewählt werden, daß sie innerhalb der Eckpunkte des folgenden Bereichs liegen:
Punkt V entspricht 72,5 Mol-% der Summe der wiederkehrenden Struktureinheiten der Formel Ia und Ih, 22,5 Mol-% der wiederkehrenden Struktureinheit der Formel Ig oder der Summe der wiederkehrenden Struktureinheiten der Formeln Ii und Ig, und 5 Mol-% der wiederkehrenden Struktureinheit der Formel Id;
Punkt W entspricht 82,5 Mol-% der Summe der wiederkehrenden Struktureinheiten der Formel Ia und Ih, 12,5 Mol-% der wiederkehrenden Struktureinheit der Formel Ig oder der Summe der wiederkehrenden Struktureinheiten der Formeln Ii und Ig, und 5 Mol-% der wiederkehrenden Struktureinheit der Formel Id;
Punkt X entspricht 82,5 Mol-% der Summme der wiederkehrenden Struktureinheiten der Formel Ia und Ih, 2,5 Mol-% der wiederkehrenden Struktureinheit der Formel Ig oder der Summe der wiederkehrenden Struktureinheiten der Formeln Ii und Ig, und 15 Mol-% der wiederkehrenden Struktureinheit der Formel Id;
Punkt Y entspricht 60 Mol-% der Summe der wiederkehrenden Struktureinheiten der Formel Ia und Ih, 2,5 Mol-% der wiederkehrenden Struktureinheit der Formel Ig oder der Summe der wiederkehrenden Struktureinheiten der Formeln Ii und Ig, und 37,5 Mol-% der wiederkehrenden Struktureinheit der Formel Id;
Punkt Z entspricht 52,5 Mol-% der Summe der wiederkehrenden Struktureinheiten der Formel Ia und Ih, 22,5 Mol-% der wiederkehrenden Struktureinheit der Formel Ig oder der Summe der wiederkehrenden Struktureinheiten der Formeln Ii und Ig, und 25 Mol-% der wiederkehrenden Struktureinheit der Formel Id.

**3.** Copolyamide gemäß einem der Ansprüche 1 oder 2, dadurch gekennzeichnet, daß $Ar^1$ und/oder $Ar^2$ 1,4-Phenylen bedeutet.

**4.** Copolyamide gemäß einem der Ansprüche 1, 2 oder 3, dadurch gekennzeichnet, daß $Ar^3$ und/oder $Ar^4$ 1,3-Phenylen bedeutet.

**5.** Copolyamide gemäß Anspruch 1, dadurch gekennzeichnet, daß die Mengenanteile der wiederkehrenden Struktureinheiten der Formeln Ib, Ic und Id, bezogen auf die Gesamtmenge dieser Struktureinheiten, so gewählt werden, daß sie innerhalb der Eckpunkte des folgenden Bereichs liegen:
Punkt O' entspricht 55 Mol-% des Restes der Formel Ib, 30 Mol-% des Restes der Formel Ic und 15 Mol-% des Restes der Formel Id,
Punkt P' entspricht 60 Mol-% des Restes der Formel Ib, 25 Mol-% des Restes der Formel Ic und 15 Mol-% des Restes der Formel Id;

Punkt Q' entspricht 60 Mol-% des Restes der Formel Ib, 5 Mol-% des Restes der Formel Ic und 35 Mol-% des Restes der Formel Id;
Punkt R' entspricht 30 Mol-% des Restes der Formel Ib, 5 Mol-% des Restes der Formel Ic und 65 Mol-% des Restes der Formel Id,
Punkt S' entspricht 20 Mol-% der Restes der Formel Ib, 15 Mol-% des Restes der Formel Ic und 65 Mol-% des Restes der Formel Id und
Punkt T' entspricht 20 Mol-% des Restes der Formel Ib, 30 Mol-% des Restes der Formel Ic und 50 Mol-% des Restes der Formel Id.

**6.** Copolyamide gemäß Anspruch 2, dadurch gekennzeichnet, daß die Mengenanteile der wiederkehrenden Struktureinheiten der Formeln Ia, Ih, Id und Ig oder der Formel Ia, Ih, Ii, Id und Ig, bezogen auf die Gesamtmenge dieser Struktureinheiten, so gewählt werden, daß sie innerhalb der Eckpunkte des folgenden Bereichs liegen:
Punkt V' entspricht 75 Mol-% der Summe der wiederkehrenden Struktureinheiten der Formel Ia und Ih, 20 Mol-% der wiederkehrenden Struktureinheit der Formel Ig oder der Summe der wiederkehrenden Struktureinheiten der Formeln Ii und Ig, und 5 Mol-% der wiederkehrenden Struktureinheit der Formel Id;
Punkt W' entspricht 80 Mol-% der Summe der wiederkehrenden Struktureinheiten der Formel Ia und Ih, 15 Mol-% der wiederkehrenden Struktureinheit der Formel Ig oder der Summe der wiederkehrenden Struktureinheiten der Formeln Ii und Ig, und 5 Mol-% der wiederkehrenden Struktureinheiten der Formel Id;
Punkt X' entspricht 80 Mol-% der Summe der wiederkehrenden Struktureinheiten der Formel Ia und Ih, 2,5 Mol-% der wiederkehrenden Struktureinheit der Formel Ig oder der Summe der wiederkehrenden Struktureinheiten der Formeln Ii und Ig, und 17,5 Mol-% der wiederkehrenden Struktureinheit der Formel Id;
Punkt Y' entspricht 62,5 Mol-% der Summe der wiederkehrenden Struktureinheiten der Formeln Ia und Ih, 2,5 Mol-% der wiederkehrenden Struktureinheit der Formel Ig oder der Summe der wiederkehrenden Struktureinheiten der Formel Ii, und Ig und 35 Mol-% der wiederkehrenden Struktureinheit der Formel Id;
Punkt Z' entspricht 55 Mol-% der Summe der wiederkehrenden Struktureinheiten der Formel Ia und Ih, 20 Mol-% der wiederkehrenden Struktureinheit der Formel Ig oder der Summe der wiederkehrenden Struktureinheiten der Formeln Ii und Ig, und 25 Mol-% der wiederkehrenden Struktureinheit der Formel Id.

**7.** Copolyamide gemäß Anspruch 1, dadurch gekennzeichnet, daß $Ar^1$ und $Ar^2$ 1,4-Phenylen sind, $Ar^3$ 1,3-Phenylen bedeutet und $R^1$ $C_1$-$C_4$-Alkyl, vorzugsweise Methyl, ist und daß der Mengenanteil der wiederkehrenden Struktureinheiten der Formeln Ib, Ic und Id, bezogen die Gesamtmenge dieser Struktureinheiten, so gewählt werden, daß sie innerhalb folgender Grenzen liegen:
Struktureinheit der Formel Ib: 30 - 40 Mol-%, vorzugsweise 34 - 36 Mol-% Struktureinheit der Formel Ic : 10 - 30 Mol-%, vorzugsweise 18 - 22 Mol-% und
Struktureinheit der Formel Id: 35 - 55 Mol-%, vorzugsweise 43 - 57 Mol-%.

**8.** Verfahren zur Herstellung der Copolyamide gemäß Anspruch 1, dadurch gekennzeichnet, daß man ein Dicarbonsäuredichlorid der Formel II und gegebenenfalls der Formel VII mit mit einem Gemisch der Diamine der Formeln III, IV und V und gegebenenfalls VI umsetzt

$ClOC\text{-}Ar^1\text{-}COCl$ (II), $H_2N\text{-}Ar^2\text{-}NH_2$ (III), $H_2N\text{-}Ar^3\text{-}NH_2$ (IV),

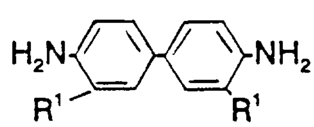 (V),

$H_2N\text{-}R^3\text{-}NH_2$ (VI), $ClOC\text{-}R^2\text{-}COCl$ (VII),

worin $Ar^1$, $Ar^2$, $Ar^3$, $R^1$, $R^2$ und $R^3$ die in Anspruch 1 definierte Bedeutung besitzen und worin die Mengenverhältnisse der Diamine III, IV und V so zu wählen sind, daß Copolyamide mit den in Anspruch

1 definierten Gehalten an Struktureinheiten Ib, Ic und Id entstehen.

**9.** Verfahren zur Herstellung der Copolyamide gemäß Anspruch 2, dadurch gekennzeichnet, daß man ein Dicarbonsäuredichlorid der Formel II und der Formel VIII und gegebenenfalls VII mit einem Gemisch der Diamine der Formeln IX und V und gegebenenfalls X und/oder VI umsetzt

$ClOC\text{-}Ar^1\text{-}COCl$ (II), $H_2N\text{-}Ar^5\text{-}NH_2$ (IX), $H_2N\text{-}Ar^6\text{-}NH_2$ (X),

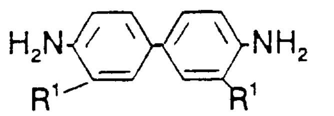 (V),

$H_2N\text{-}R^3\text{-}NH_2$ (VI), $ClOC\text{-}R^2\text{-}COCl$ (VII),
$ClOC\text{-}Ar^4\text{-}COCl$ (VIII),

worin $Ar^1$, $Ar^5$, $Ar^6$, $Ar^4$ $R^1$, $R^2$ und $R^3$ die in Anspruch 2 definierte Bedeutung besitzen und worin die Mengenverhältnisse der Monomeren der Formeln II, IX, V und VIII oder II, IX, X, V und VIII so zu wählen sind, daß Copolyamide mit den in Anspruch 2 definierten Gehalten an Struktureinheiten Ia, Ih, Id und Ig oder Ia, Ih, Ii, Id und Ig entstehen.

**10.** Geformte Gebilde, wie Fäden, Fasern, Faserpulp, Filme, Folien oder Membranen, dadurch gekennzeichnet, daß diese aus einem Copolyamid nach einem der Ansprüche 1 oder 2 bestehen.

## Claims

**1.** Copolyamides which are soluble in an organic polyamide solvent and have an inherent viscosity, measured on solutions of 0.5 g of polyamide in 100 ml of 98% sulfuric acid at 25 °C, of about 3.5 to 6.6 dl/g, containing the recurring structural units of the formulae Ia, Ib, Ic and Id and optionally the recurring structural units of the formula Ie and/or If

$-OC\text{-}Ar^1\text{-}CO-$ (Ia),
$-NH\text{-}Ar^2\text{-}NH-$(Ib),
$-NH\text{-}Ar^3\text{-}NH-$ (Ic),

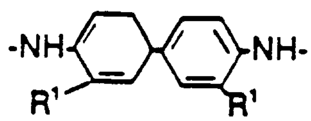 (Id),

$-OC\text{-}R^2\text{-}CO-$ (Ie),
$-NH\text{-}R^3\text{-}NH-$ (If),

where the sum total of the recurring structural units of the formulae Ia, Ib, Ic and Id is at least 95 mol% and the recurring structural units of the formulae Ie and/or If can be up to 5 mol% and the mole fraction of the recurring structural units of the formulae Ia and optionally Ie corresponds substantially to the mole fraction of the recurring structural units Ib, Ic, Id and optionally If, and where $Ar^1$ is a divalent aromatic radical whose valence bonds are in the para or a comparable coaxial or parallel position to one another and which optionally has one or more substituents which are inert toward carbonyl chlorides,
$Ar^2$ is 1,4-phenylene
$Ar^3$ is 1,3-phenylene, $Ar^2$ and/or $Ar^3$ optionally having one or more substituents which are inert toward carbonyl chlorides,
$R^1$ is a $C_1$-$C_6$-alkyl radical, a $C_1$-$C_6$-alkoxy radical or a halogen atom,
$R^2$ is a divalent aliphatic, cycloaliphatic or araliphatic radical, and
$R^3$ has one of the meanings defined for $R^2$, with the proviso that within one and the same polymer molecule the radicals $Ar^1$, $Ar^2$, $Ar^3$, $R^1$, $R^2$ and $R^3$ can be different within the given definitions and that the proportions of the recurring structural units of the formulae Ib, Ic and Id, based on the total amount

of these structural units, are selected in such a way that they lie within the corner points of the following region:

point O corresponds to 45 mol% of the radical of the formula Ib, 40 mol% of the radical of the formula Ic and 15 mol% of the radical of the formula Id;

point P corresponds to 65 mol% of the radical of the formula Ib, 20 mol% of the radical of the formula Ic and 15 mol% of the radical of the formula Id;

point Q corresponds to 65 mol% of the radical of the formula Ib, 5 mol% of the radical of the formula Ic and 30 mol% of the radical of the formula Id;

point R corresponds to 30 mol% of the radical of the formula Ib, 5 mol% of the radical of the formula Ic and 65 mol% of the radical of the formula Id;

point S corresponds to 20 mol% of the radical of the formula Ib, 15 mol% of the radical of the formula Ic and 65 mol% of the radical of the formula Id; and

point T corresponds to 20 mol% of the radical of the formula Ib, 40 mol% of the radical of the formula Ic and 40 mol% of the radical of the formula Id.

**2.** Copolyamides which are soluble in an organic polyamide solvent and have an inherent viscosity, measured on solutions of 0.5 g of polyamide in 100 ml of 98% sulfuric acid at 25 °C, of about 3.5 to 6.6 dl/g, containing the recurring structural units of the formulae Ia, Ih, Id and Ig and optionally the recurring structural units of the formulae Ii and/or Ie and/or If,

$-OC-Ar^1-C-$ (Ia),
$-NH-Ar^5-NH-$ (Ih),
$-NH-Ar^6-NH-$ (Ii),

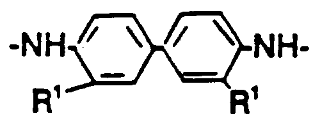

(Id),

$-OC-R^2-CO-$ (Ie),
$-NH-R^3-NH-$ (If),
$-OC-Ar^4-CO-$ (Ig),

where the sum total of the recurring structural units of the formulae Ia, Ih, Id and Ig and optionally Ii is at least 95 mol% and the recurring structural units of the formulae Ie and/or If can be up to 5 mol% and the mole fraction of the recurring structural units of the formulae Ia and Ig and optionally Ie corresponds substantially to the mole fraction of the recurring structural units Ih and Id and optionally Ii and/or If, and where $Ar^1$, $R^1$, $R^2$ and $R^3$ are each as defined in claim 1, $Ar^4$ and $Ar^6$ are divalent aromatic radicals whose valence bonds are in the meta or in a comparable kinked position relative to one another and which optionally have one or more substituents which are inert toward carbonyl chlorides, and $Ar^5$ has one of the meanings defined for $Ar^1$, with the proviso that within one polymer molecule the radicals $Ar^1$, $Ar^5$, $Ar^6$, $Ar^4$, $R^1$, $R^2$ and $R^3$ can be different within the given definitions and that the proportions of the recurring structural units of the formulae Ia, Ih, Id and Ig and optionally Ii, based on the total amount of these structural units, are selected in such a way that they lie within the corner points of the following region:

point V corresponds to 72.5 mol% of the sum total of the recurring structural units of the formula Ia and Ih, 22.5 mol% of the recurring structural unit of the formula Ig or the sum total of the recurring structural units of the formulae Ii and Ig, and 5 mol% of the recurring structural unit of the formula Id;

point W corresponds to 82.5 mol% of the sum total of the recurring structural units of the formula Ia and Ih, 12.5 mol% of the recurring structural unit of the formula Ig or the sum total of the recurring structural units of the formulae Ii and Ig, and 5 mol% of the recurring structural unit of the formula Id;

point X corresponds to 82.5 mol% of the sum total of the recurring structural units of the formula Ia and Ih, 2.5 mol% of the recurring structural unit of the formula Ig or the sum total of the recurring structural units of the formulae Ii and Ig, and 15 mol% of the recurring structural unit of the formula Id;

point Y corresponds to 60 mol% of the sum total of the recurring structural units of the formula Ia and Ih, 2.5 mol% of the recurring structural unit of the formula Ig or the sum total of the recurring structural units of the formulae Ii and Ig, and 37.5 mol% of the recurring structural unit of the formula Id;

point Z corresponds to 52.5 mol% of the sum total of the recurring structural units of the formula Ia and Ih, 22.5 mol% of the recurring structural unit of the formula Ig or the sum total of the recurring structural units of the formulae Ii and Ig, and 25 mol% of the recurring structural unit of the formula Id.

**3.** Copolyamide as claimed in either of claims 1 or 2, characterized in that $Ar^1$ and/or $Ar^2$ is 1,4-phenylene.

**4.** Copolyamides as claimed in any one of claims 1, 2 or 3, characterized in that $Ar^3$ and/or $Ar^4$ is 1,3-phenylene.

**5.** Copolyamide as claimed in claim 1, characterized in that the proportions of the recurring structural units of the formulae Ib, Ic and Id, based on the total amount of these structural units, are selected in such a way that they lie within the corner points of the following region:
point O' corresponds to 55 mol% of the radical of the formula Ib, 30 mol% of the radical of the formula Ic and 15 mol% of the radical of the formula Id,
point P' corresponds to 60 mol% of the radical of the formula Ib, 25 mol% of the radical of the formula Ic and 15 mol% of the radical of the formula Id;
point Q' corresponds to 60 mol% of the radical of the formula Ib, 5 mol% of the radical of the formula Ic and 35 mol% of the radical of the formula Id;
point R' corresponds to 30 mol% of the radical of the formula Ib, 5 mol% of the radical of the formula Ic and 65 mol% of the radical of the formula Id,
point S' corresponds to 20 mol% of the radical of the formula Ib, 15 mol% of the radical of the formula Ic and 65 mol% of the radical of the formula Id,
point T' corresponds to 20 mol% of the radical of the formula Ib, 30 mol% of the radical of the formula Ic and 50 mol% of the radical of the formula Id.

**6.** Copolyamide as claimed in claim 2, characterized in that the proportions of the recurring structural units of the formulae Ia, Ih, Id and Ig or of the formula Ia, Ih, Ii, Id and Ig, based on the total amount of these structural units, are selected in such a way that they lie within the corner points of the following region:
point V' corresponds to 75 mol% of the sum total of the recurring structural units of the formula Ia and Ih, 20 mol% of the recurring structural unit of the formula Ig or the sum total of the recurring structural units of the formulae Ii and Ig, and 5 mol% of the recurring structural unit of the formula Id;
point W' corresponds to 80 mol% of the sum total of the recurring structural units of the formula Ia and Ih, 15 mol% of the recurring structural unit of the formula Ig or the sum total of the recurring structural units of the formulae Ii and Ig, and 5 mol% of the recurring structural units of the formula Id;
point X' corresponds to 80 mol% of the sum total of the recurring structural units of the formula Ia and Ih, 2.5 mol% of the recurring structural unit of the formula Ig or the sum total of the recurring structural units of the formulae Ii and Ig, and 17.5 mol% of the recurring structural unit of the formula Id;
point Y' corresponds to 62.5 mol% of the sum total of the recurring structural units of the formulae Ia and Ih, 2.5 mol% of the recurring structural unit of the formula Ig or the sum total of the recurring structural units of the formula Ii and Ig, and 35 mol% of the recurring structural unit of the formula Id;
point Z' corresponds to 55 mol% of the sum total of the recurring structural units of the formulae Ia and Ih, 20 mol% of the recurring structural unit of the formula Ig or the sum total of the recurring structural units of the formula Ii and Ig, and 25 mol% of the recurring structural unit of the formula Id.

**7.** Copolyamide as claimed in claim 1, characterized in that $Ar^1$ and $Ar^2$ are each 1,4-phenylene, $Ar^3$ is 1,3-phenylene and $R^1$ is $C_1$-$C_4$-alkyl, preferably methyl, and the proportions of the recurring structural units of the formulae Ib, Ic and Id, based on the total amount of these structural units, are selected in such a way that they lie within the following limits:
structural unit of the formula Ib: 30-40 mol%, preferably 34-36 mol%, structural unit of the formula Ic: 10-30 mol%, preferably 18-22 mol%, and structural unit of the formula Id: 35-55 mol%, preferably 43-57 mol% .

**8.** A process for preparing the copolyamide of claim 1, which comprises reacting a dicarbonyl dichloride of the formula II and optionally of the formula VII with a mixture of the diamines of the formulae III, IV and V and optionally VI

$ClOC-Ar^1-COCl$ (II), $H_2N-Ar^2-NH$, (III), $H_2N-Ar^3-NH_2$ (IV),

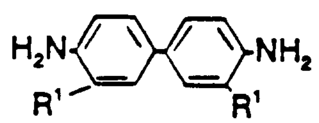 (V),

$H_2N-R^3-NH_2$ (VI), $ClOC-R^2-COCl$ (VII),

where $Ar^1$, $Ar^2$, $Ar^3$, $R^1$, $R^2$ and $R^3$ are each as defined in claim 1 and where the mixing ratios of the diamines III, IV and V are to be chosen in such a way as to produce copolyamides having the contents of structural units Ib, Ic and Id defined in claim 1.

**9.** A process for preparing the copolyamide of claim 2, which comprises reacting a dicarbonyl dichloride of the formula II and of the formula VIII and optionally VII with a mixture of the diamines of the formulae IX and V and optionally X and/or VI

$ClOC-Ar^1-COCl$ (II), $H_2N-Ar^5-NH_2$ (IX), $H_2N-Ar^6-NH_2$ (X),

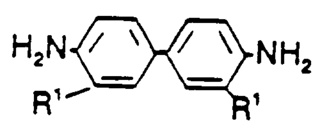 (V),

$H_2N-R^3-NH_2$ (VI), $ClOC-R^2-COCl$ (VII),
$ClOC-Ar^4-COCl$ (VIII),

where $Ar^1$, $Ar^5$, $Ar^6$, $Ar^4$, $R^1$, $R^2$ and $R^3$ are each as defined in claim 2 and where the mixing ratios of the monomers of the formulae II, IX, V and VIII or II, IX, X, V and VIII are to be chosen in such a way as to produce copolyamides having the contents of structural units Ia, Ih, Id and Ig or Ia, Ih, Ii, Id and Ig defined in claim 2.

**10.** Formed structures, such as a filament, fiber, fiber pulp, film, sheet or membrane, comprising a copolyamide as claimed in either of claims 1 or 2.

## Revendications

**1.** Copolyamides qui sont solubles dans les solvants organiques de type polyamides, qui ont une viscosité inhérente, mesurée sur des solutions de 0,5 g de polyamide dans 100 ml d'acide sulfurique à 98 % à 25 ° C, d'environ 3,5 à 6,6 dl/g, et qui comportent les unités structurales répétitives des formules Ia, Ib, Ic et Id et éventuellement les unités structurales répétitives des formules Ie et/ou If

$-OC-Ar^1-CO-$ (Ia),
$-NH-Ar^2-NH-$ (Ib),
$-NH-Ar^3-NH-$ (Ic),

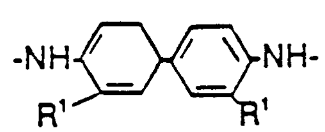 (Id),

$-OC-R^2-CO-$ (Ie),
$- NH-R^3-NH-$ (If),

où la somme des unités structurales répétitives des formules Ia, Ib, Ic et Id est d'au moins 95 moles % et les unités structurales répétitives des formules Ie et/ou If peuvent représenter jusqu'à 5 moles %, et la teneur molaire en unités structurales répétitives des formules Ia et éventuellement Ie correspond environ à la teneur molaire en unités structurales répétitives Ib, Ic, Id et éventuellement If,
où $Ar^1$ est un radical aromatique bivalent, dont les liaisons de valence sont, l'une par rapport à l'autre,

en position para, ou dans une position comparable coaxiale ou parallèle, et qui éventuellement comporte un ou plusieurs substituants inertes vis-à-vis des chlorures d'acides carboxyliques,
$Ar^2$ représente le 1,4-phénylène,
$Ar^3$ représente le 1,3-phénylène, où $Ar^2$ et/ou $Ar^3$ comportent éventuellement un ou plusieurs substituants inertes vis-à-vis des chlorures d'acides carboxyliques,
$R^1$ représente un radical alkyle en $C_1$-$C_6$, un radical alcoxy en $C_1$-$C_6$ ou un atome d'halogène,
$R^2$ représente un radical bivalent, aliphatique, cycloaliphatique ou araliphatique et
$R^3$ a une des significations données pour $R^2$, à la condition que les radicaux $Ar^1$, $Ar^2$, $Ar^3$, $R^1$, $R^2$ et $R^3$, dans une molécule de polymère, puissent être différents à l'intérieur des définitions données et que les proportions quantitatives des unités structurales répétitives des formules Ib, Ic et Id, rapportées à la quantité totale de ces unités structurales, soient choisies de telle façon qu'elles se trouvent à l'intérieur des sommets d'angles du domaine suivant :
le point O correspond à 45 moles % du radical de formule Ib, à 40 moles % du radical de formule Ic et à 15 moles % du radical de formule Id ;
le point P correspond à 65 moles % du radical de formule Ib, à 20 moles % du radical de formule Ic et à 15 moles % du radical de formule Id ;
le point Q correspond à 65 moles % du radical de formule Ib, à 5 moles % du radical de formule Ic et à 30 moles % du radical de formule Id ;
le point R correspond à 30 moles % du radical de formule Ib, à 5 moles % du radical de formule Ic et à 65 moles % du radical de formule Id ;
le point S correspond à 20 moles % du radical de formule Ib, à 15 moles % du radical de formule Ic et à 65 moles % du radical de formule Id ; et
le point T correspond à 20 moles % du radical de formule Ib, à 40 moles % du radical de formule Ic et à 40 moles % du radical de formule Id.

**2.** Copolyamides solubles dans des solvants organiques de type polyamides, ces copolyamides ayant une viscosité inhérente, mesurée dans des solutions de 0,5 g de polyamide dans 100 ml d'acide sulfurique à 98 %, à 25 ° C, d'environ 3,5 à 6,6 dl/g, et comportant les unités structurales répétitives des formules Ia, Ih, Id et Ig, et éventuellement les unités structurales répétitives des formules Ii et/ou Ie et/ou If,

$-OC-AR^1-C-$ (Ia),
$-NH-Ar^5-NH-$ (Ih),
$-NH-Ar^6-NH-$ (Ii),

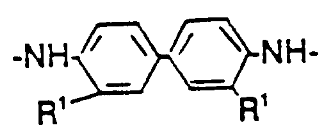

(Id),

$-OC-R^2-CO-$ (Ie),
$-NH-R^3-NH-$ (If),
$-OC-Ar^4-CO-$ (Ig),

où la somme des unités structurales répétitives des formules Ia, Ih, Id et Ig et éventuellement Ii est d'au moins 95 moles % et les unités structurales répétitives des formules Ie et/ou If peuvent aller jusqu'à 5 moles % et la teneur molaire en unités structurales répétitives des formules Ia et Ig et éventuellement Ie correspond à environ la teneur molaire des unités structurales répétitives Ih et Id et éventuellement Ii et/ou If,
où $Ar^1$, $R^1$, $R^2$ et $R^3$ ont la signification donnée dans la revendication 1, $Ar^4$ et $Ar^6$ représentent des radicaux aromatiques bivalents dont les liaisons de valence sont disposées, les unes par rapport aux autres, en position méta ou dans une position coudée comparable, qui présentent éventuellement un ou plusieurs substituants inertes vis à vis des chlorures d'acides carboxyliques et $Ar^5$ a une des significations données pour $Ar^1$, à la condition que les radicaux $Ar^1$, $Ar^5$, $Ar^6$, $Ar^4$, $R^1$, $R^2$ et $R^3$ à l'intérieur d'une molécule de polymère puissent être différents dans le cadre des définitions données et que les teneurs quantitatives en unités structurales répétitives des formules Ia, Ih, Id et Ig et éventuellement Ii, rapportées à la quantité totale de ces unités structurales, soient choisies de telle

façon qu'elles se trouvent à l'intérieur des sommets d'angles du domaine suivant :
le point V correspond à 72,5 moles % de la somme des unités structurales répétitives des formules Ia et Ih, à 22,5 moles % de l'unité structurale répétitive de la formule Ig ou de la somme des unités structurales répétitives des formules Ii et Ig et à 5 moles % de l'unité structurale répétitive de la formule Id ;
le point W correspond à 82,5 moles % de la somme des unités structurales répétitives des formules Ia et Ih, à 12,5 moles % de l'unité structurale répétitive de la formule Ig ou de la somme des unités structurales répétitives des formules Ii et Ig, et à 5 moles % de l'unité structurale répétitive de la formule Id ;
le point X correspond à 82,5 moles % de la somme des unités structurales répétitives des formules Ia et Ih, à 2,5 moles % de l'unité structurale répétitive de la formule Ig ou de la somme des unités structurales répétitives des formules Ii et Ig, et à 15 moles % de l'unité structurale répétitive de la formule Id ;
le point Y correspond à 60 moles % de la somme des unités structurales répétitives des formules Ia et Ih, à 2,5 moles % de l'unité structurale répétitive de la formule Ig ou de la somme des unités structurales répétitives des formules Ii et Ig, et à 37,5 moles % de l'unité structurale répétitive de la formule Id ;
le point Z correspond à 52,5 moles % de la somme des unités structurales répétitives des formules Ia et Ih, à 22,5 moles % de l'unité structurale répétitive de la formule Ig ou de la somme des unités structurales répétitives des formules Ii et Ig, et à 25 moles % de l'unité structurale répétitive de la formule Id.

**3.** Copolyamides selon l'une des revendications 1 ou 2, caractérisés en ce que $Ar^1$ et/ou $Ar^2$ représentent le 1,4-phénylène.

**4.** Copolyamides selon l'une des revendications 1, 2 ou 3, caractérisés en ce que $Ar^3$ et/ou $Ar^4$ représentent le 1,3-phénylène.

**5.** Copolyamides selon la revendication 1, caractérisés en ce que les portions quantitatives des unités structurales répétitives des formules Ib, Ic et Id, calculées sur la quantité totale de ces unités structurales, sont choisies de telle sorte qu'elles se trouvent à l'intérieur des points d'angles du domaine suivant :
le point O' correspond à 55 moles % du radical de la formule Ib, à 30 moles % du radical de la formule Ic et à 15 moles % du radical de la formule Id,
le point P' correspond à 60 moles % du radical de la formule Ib, à 25 moles % du radical de la formule Ic et à 15 moles % du radical de la formule Id ;
le point Q' correspond à 60 moles % du radical de la formule Ib, à 5 moles % du radical de la formule Ic et à 35 moles % du radical de la formule Id ;
le point R' correspond à 30 moles % du radical de la formule Ib, à 5 moles % du radical de la formule Ic et à 65 moles % du radical de la formule Id,
le point S' correspond à 20 moles % du radical de la formule Ib, à 15 moles % du radical de la formule Ic et à 65 moles % du radical de la formule Id, et
le point T' correspond à 20 moles % du radical de la formule Ib, à 30 moles % du radical de la formule Ic et à 50 moles % du radical de la formule Id.

**6.** Copolyamides selon la revendication 2, caractérisés en ce que les portions quantitatives des unités structurales répétitives des formules Ia, Ih, Id et Ig ou des formules Ia, Ih, Ii, Id et Ig, calculées sur la quantité totale de ces unités structurales, sont choisies de telle façon qu'elles se trouvent à l'intérieur des points d'angles du domaine suivant :
le point V' correspond à 75 moles % de la somme des unités structurales répétitives des formules Ia et Ih, à 20 moles % de l'unité structurale répétitive de la formule Ig ou de la somme des unités structurales répétitives des formules Ii et Ig, et à 5 moles % de l'unité structurale répétitive de la formule Id ;
le point W' correspond à 80 moles % de la somme des unités structurales répétitives des formules Ia et Ih, à 15 moles % de l'unité structurale répétitive de la formule Ig ou de la somme des unités structurales répétitives des formules Ii et Ig, et à 5 moles % de l'unité structurale répétitive de la formule Id ;
le point X' correspond à 80 moles % de la somme des unités structurales répétitives des formules Ia et

Ih, à 2,5 moles % de l'unité structurale répétitive de la formule Ig ou de la somme des unités structurales répétitives des formules Ii et Ig et à 17,5 moles % de l'unité structurale répétitive de la formule Id ;
le point Y' correspond à 62,5 moles % de la somme des unités structurales répétitives des formules Ia et Ih, à 2,5 moles % de l'unité structurale répétitive de la formule Ig ou de la somme des unités structurales répétitives des formules Ii et Ig et à 35 modes % de l'unité structurale répétitive de la formule Id ;
le point Z' correspond à 55 modes % de la somme des unités structurales répétitives des formules Ia et Ih, à 20 moles % de l'unité structurale répétitive de la formule Ig ou de la somme des unités structurales répétitives des formules Ii et Ig et à 25 modes % de l'unité structurale répétitive de la formule Id.

**7.** Copolyamides selon la revendication 1, caractérisés en ce que $Ar^1$ et $Ar^2$ sont le 1,4-phénylène, $Ar^3$ représente le 1,3-phénylène et $R^1$ est un alkyle en $C_1$-$C_4$, de préférence le méthyle, et en ce que la portion quantitative des untités structurales répétitives des formules Ib, Ic et Id, calculées sur la quantité totale de ces unités structurales, sont choisies de telle façon qu'elles se trouvent à l'intérieur des limites suivantes :
unité structurale de formule Ib : 30-40 moles %, de préférence 34-36 moles %
unité structurale de formule Ic : 10-30 moles %, de préférence 18-22 moles %
et
unité structurale de formule Id : 35-55 moles %, de préférence 43-57 moles %.

**8.** Procédé pour préparer les copolyamides selon la revendication 1, caractérisé en ce que l'on fait réagir un dichlorure d'acide dicarboxylique de formule II et éventuellement de formule VII avec un mélange des diamines des formules III, IV et V et éventuellement VI

$ClOC\text{-}Ar^1\text{-}COCl$ (II), $H_2N\text{-}Ar^2\text{-}NH_2$ (III), $H_2N\text{-}Ar^3\text{-}NH_2$ (IV),

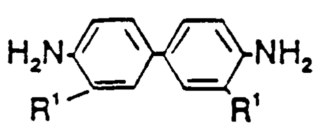 (V),

$H_2N\text{-}R^3\text{-}NH_2$ (VI), $ClOC\text{-}R^2\text{-}COCl$ (VII),

où $Ar^1$, $Ar^2$, $Ar^3$, $R^1$, $R^2$ et $R^3$ ont la signification donnée dans la revendication 1, et où les rapports quantitatifs des diamines III, IV et V sont choisis de telle façon qu'il se forme des copolyamides ayant les teneurs définies en unités structurales Ib, Ic et Id dans la revendication 1.

**9.** Procédé pour préparer les copolyamides selon la revendication 2, caractérisé en ce que l'on fait réagir un dichlorure d'acide dicarboxylique de formule II et de formule VIII et éventuellement VII avec un mélange des diamines des formules IX et V et éventuellement X et/ou VI

$ClOC\text{-}Ar^1\text{-}COCl$ (II), $H_2N\text{-}Ar^5\text{-}NH_2$ (IX), $H_2N\text{-}Ar^6\text{-}NH_2$ (X),

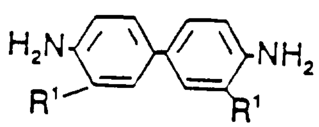 (V),

$H_2N\text{-}R^3\text{-}NH_2$ (VI), $ClOC\text{-}R^2\text{-}COCl$ (VII),
$ClOC\text{-}Ar^4\text{-}COCl$ (VIII),

où $Ar^1$, $Ar^5$, $Ar^6$, $Ar^4$, $R^1$, $R^2$ et $R^3$ ont la signification donnée dans la revendication 2 et où les rapports quantitatifs des monomères des formules II, IX, V et VIII ou II, IX, X, V et VIII sont choisis de telle façon qu'il se forme des copolyamides avec des teneurs définies en unités structurales Ia, Ih, Id et Ig ou Ia, Ih, Ii, Id et Ig à la revendication 2.

**10.** Produits façonnés, comme des fils, des fibres, de la pulpe de fibres, des films, des feuilles ou des membranes, caractérisés en ce qu'ils sont constitués d'un copolyamide selon une des revendications 1 ou 2.

Fig. 1

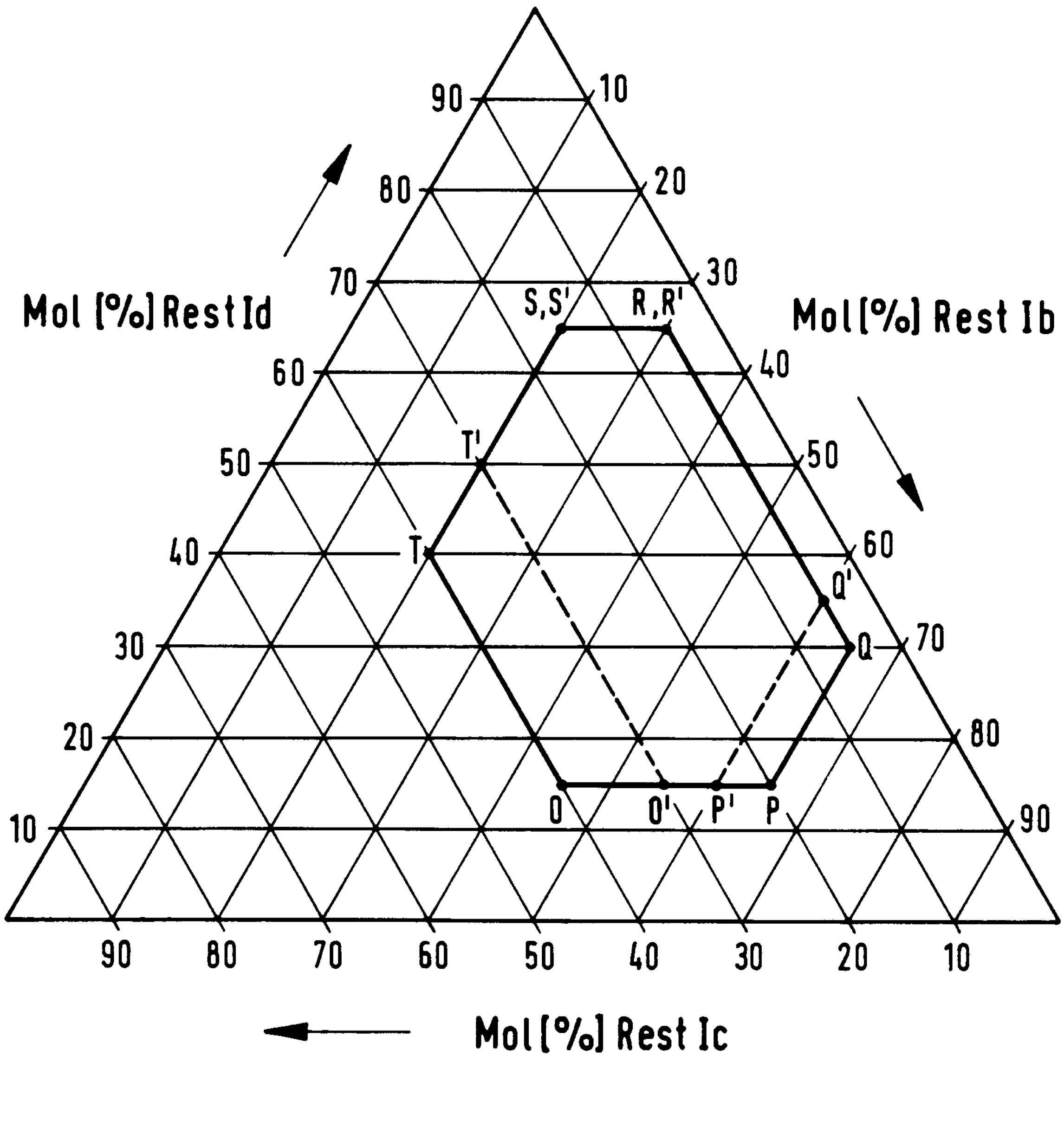
Mol [%] Rest Id
Mol [%] Rest Ib
Mol [%] Rest Ic
S,S'
R,R'
T'
T
Q'
Q
O
O'
P'
P
10
20
30
40
50
60
70
80
90

Fig. 2

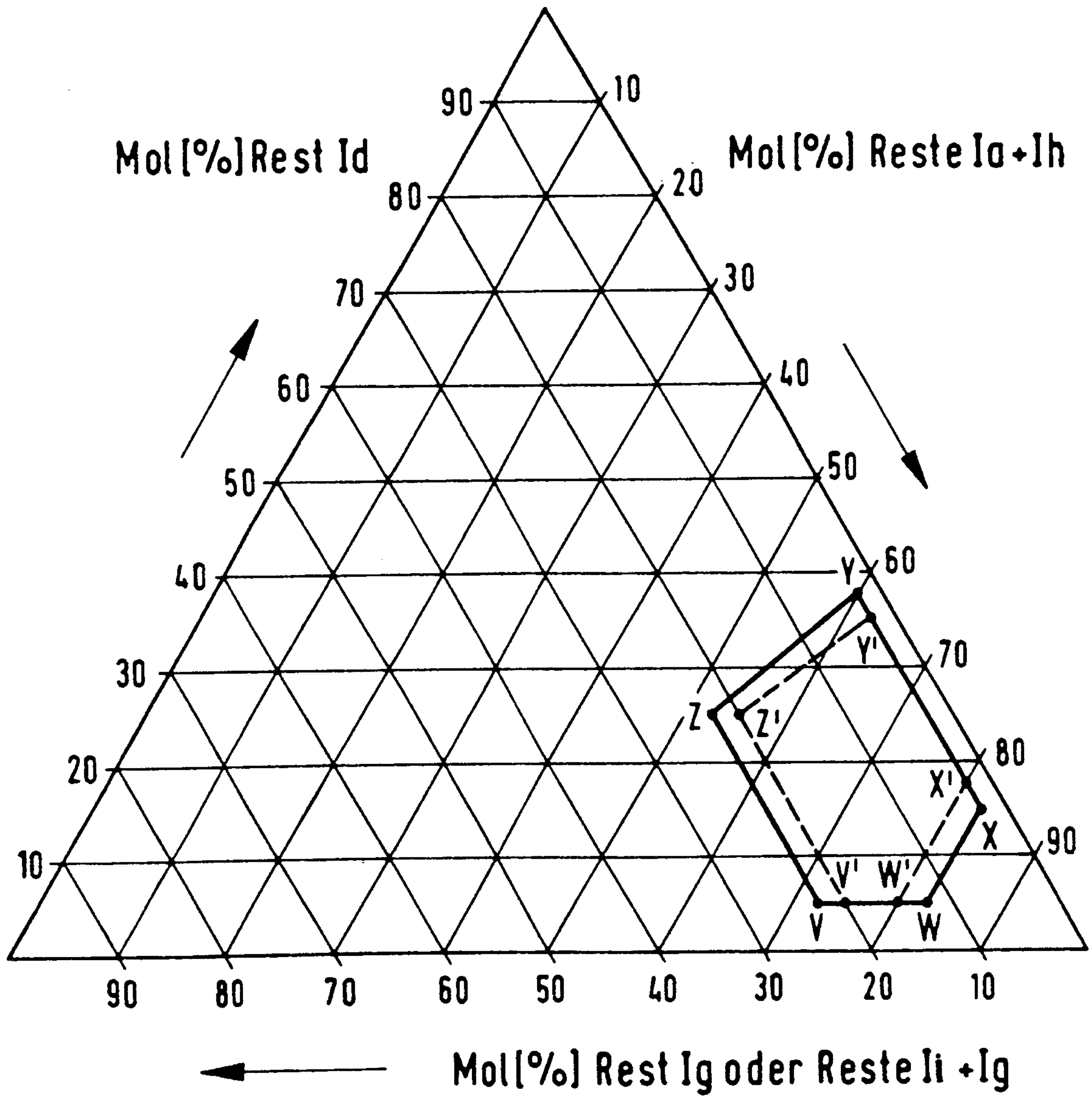
Mol [%] Rest Id
Mol [%] Reste Ia+Ih
90
80
70
60
50
40
30
20
10
10
20
30
40
50
60
70
80
90
90
80
70
60
50
40
30
20
10
Y
Y'
Z
Z'
X'
X
V
V'
W'
W
Mol [%] Rest Ig oder Reste Ii +Ig